# EUROPEAN PATENT SPECIFICATION

(11) **EP 0 521 153 B1**
(45) Date of publication and mention of the grant of the patent: **14.03.2001**
(21) Application number: 92906348.5
(22) Date of filing: 23.01.1992
(51) Int. Cl.: G06F 15/16, G06F 9/46

(54) **METHOD AND APPARATUS FOR SCOPED INTERPROCESS MESSAGE SWITCHING**
VERFAHREN UND GERÄT ZUR NACHRICHTENVERMITTLUNG ZWISCHEN PROZESSEN MIT ABGEGRENZTEM BEREICH
PROCEDE ET APPAREIL POUR LA COMMUTATION DE MESSAGE INTERPROCESSUS A ETENDUE DELIMITEE

(30) Priority: 23.01.1991 US 644942; 25.01.1991 US 646357
(43) Date of publication of application: 07.01.1993
(73) Proprietor: SUN MICROSYSTEMS, INC., Mountain View, CA 94043 (US)
(72) Inventor: FOSS, Carolyn L., CA 94306 (US); HARE, Dwight, F., Menlo Park, CA 94025 (US); McALLISTER, Richard, F., Palo Alto, CA 94301 (US); NGUYEN, Tin, Anh, Danville, CA 94506 (US); PEARL, Amy, Los Altos Hills, California CA 94022 (US); SHAIO, Sami, Palo Alto, California CA 94301 (US)
(74) Representative: Wombwell, Francis
(86) International application number: US9200564
(87) International publication number: WO9213309

(56) References cited:
- US-A- 4 470 954
- US-A- 4 644 470
- US-A- 4 672 570
- US-A- 4 706 081
- US-A- 4 747 130
- US-A- 4 759 015
- US-A- 4 760 572
- US-A- 4 792 947
- US-A- 4 807 224
- US-A- 4 853 843
- US-A- 4 864 559
- US-A- 4 899 333
- US-A- 4 922 503
- US-A- 5 018 137
- US-A- 5 036 518
- US-A- 5 041 963
- US-A- 5 058 109
- US-A- 5 079 767
- US-A- 5 095 480
- COMPUTER, vol. 23, no. 2 , February 1990 , LONG BEACH, US, pages 56 - 66 XP101459 LUPING LIANG ET AL.: 'Process Groups and Group Communications: Classifications and Requirements'

## Description

### BACKGROUND OF THE INVENTION

### 1. FIELD OF THE INVENTION:

The present invention relates to the field of computer systems. In particular, the present invention is a method and apparatus for scoped interprocess message switching between a sender process and a plurality of receiver processes.

### 2. ART BACKGROUND:

Conventional interprocess communication facilities deliver messages in as many as three modes: broadcast to all processes, multicast to a group of processes, or point-to-point to a particular process. Except for broadcast delivery, the other two modes require the sender process to supply the identities of the receiver processes. Absent from conventional facilities is the ability for a sender proces to address a scoped message to a set of receiver processes, specifying the name of the set but not the identities of the processes in the set.

United States Patent 4,864,559, "Method of Multicast Message Distribution", to Perlman discloses an interprocess communication facility for multicast to a group of processes. Specifically, this document teaches a method for distributing a multicast message to a multicast range which is larger than one link in a network by message forwarding. In the method disclosed, the sender identifies the receiver process by a multicast address which identifies a class of nodes to receive the message. A node may have any number of multicast addresses including no address. In this method, both the sender process and the receiver processes must know the specific multicast address that will be used to deliver a given message to the desired receiver processes.

A process is a copy or an instance of a program, an executable file, in process of execution. A scoped message is a message having a message scope which defines the set of receiver processes eligible for receiving the scoped message.

In cooperative multiprocess applications, processes executing within the same user session or in different user sessions, sometimes share common files. When one process changes one of the shared files, the other processes sharing the file being changed, whether they are executing within the same user session or in different user sessions, should be informed of the change. For example, a number of displaying processes may be displaying a shared common file for different user sessions, these displaying processes will have to update their displays, if the shared file is changed by one of the processes. To notify all these displaying processes, messages will have to be delivered within a session and across sessions.

Conventional facilities require that the message be broadcast or the identities of these receiver processes be provided. The former is wasteful; the latter is difficult to implement as it requires each process to communicate its changing interest in the sharable files to all other processes, and to track the changing interests of all other processes. In cooperative multiprocess applications, the set of processes within a scope changes as processes are created or destroyed, and as processes work with one file, then another.

As will be described, the present invention overcomes the disadvantages of the prior art, and provides a method and apparatus for scoped interprocess message switching between a sender process and a plurality of receiver processes.

### SUMMARY OF THE INVENTION

It is therefore an object of the present invention to improve interprocess message switching between a sender process and a plurality of receiver processes, in particular, to provide switching of scoped messages.

It is another object of the present invention that messages may be scoped to a set of receiver processes, within a session or across sessions.

These objects are realized by the method and apparatus for scoped interprocess message switching between a sender process and a plurality of receiver processes of the present invention. The preferred embodiment of the method comprises the steps of registering the receiver processes with one of a plurality of interprocess message switches, joining message scopes by the switches on behalf of the registered receiver processes, selecting the registered receiver processes by the joined switches to receive scoped messages received from the sender process, queuing copies of the received scoped messages by the selecting switches, for the selected receiver processes, executing or non-executing, signaling the selected receiver processes by the queuing switches regarding the availability of the queued scoped messages, and delivering the queued scoped messages by the signaling switches, when requested by the signaled receiver processes, to the requesting receiver processes. The scoped messages may be process oriented or object oriented. The apparatus comprises various means for accomplishing the steps of registering, joining, selecting, queuing, signaling and delivering.

For disposing the received scoped messages, the preferred embodiment of the method further comprises the steps of registering the sender process with the receiving switch, discarding scoped notice messages with no selected receiver processes by the receiving switch, and replying to scoped request messages by the receiving switch. Likewise, the apparatus further comprises various means for accomplishing the steps of registering, discarding and replying.

For replying to scoped request messages with no selected handler processes, the preferred embodiment of the method further comprises the steps of updating the scoped request messages by the receiving switch with the selection/handling results, selecting the registered observer processes by the joined switches to receive the reply messages, queuing copies of the reply messages by the receiving switch for the sender process, and by the selecting switches for the selected observer processes, executing and non-executing, signaling the sender process and the executing selected observer processes by the queuing switches regarding the availability of the queued reply messages, and delivering the queued reply messages by the signaling switches, when requested by the signaled processes, to the requesting processes. Similarly, the apparatus further comprises various means for accomplishing the steps of updating, selecting, queuing, signaling and delivering.

For replying to scoped request messages with selected handler processes, the preferred embodiment of the method further comprises the steps of queuing an additional copy of each of the scoped request messages by the receiving switch, pending results from the local handler processes or the handler selecting joined switches, and dequeuing the result pending scoped request messages by the receiving switch, upon receipt of the results, prior to the steps of updating, selecting, signaling, and delivering described above. Similarly, the apparatus further comprises various means for accomplishing the steps of queuing and dequeuing.

Registration of the receiver processes comprises registering message patterns, signaling ways and program type identifiers. Registration of the sender process comprises registering signaling ways. Receiver and sender processes may register dynamically at their initializations or some later points during their execution.

Joining message scopes by switches on behalf of the receiver processes comprises joining a plurality of message scopes of various message scope types. Message scope types comprise "Session", "File", "File in Session" and "File or Session". Message scopes comprise a particular session, a particular file, an intersection between a particular session and one or more particular files, and a union of a particular session and one or more particular files.

Scoped messages comprise a plurality of message attributes describing the messages. Message attributes comprise a message identifier, a message scope type, a message sender session identifier, a message non-session scope identifier, and a message recipient. Message attributes further comprise a message class and a message state. Message classes comprise "Request" and "Notice". Message states comprise "Created", "Sent", "Handled", "Queued", "Started" and "Failed".

Selection comprises selecting at most one handler process and any number of observer processes for each scoped message. Both handler processes and observer processes are selected regardless of message class. Both executing as well as non-executing processes (i.e. programs) are selected. Only local receiver processes are selected for session scoped messages. Remote as well as local receiver processes are selected for non-session scoped messages. Processes are selected by matching message attributes. Matchings are performed against the registered message patterns and the message patterns within message signatures contained in program type definitions.

### BRIEF DESCRIPTION OF THE DRAWINGS

**FIGURE 1** is a block diagram illustrating the apparatus of the present invention for scoped interprocess message switching between a sender process and a plurality of receiver processes, comprising a joining means and a plurality of interprocess message switches.

**FIGURE 2** is a block diagram illustrating one of the joined interprocess message switches comprising a registering means, a selecting means, a queuing means, a signaling means, a delivering means and an updating means.

**FIGURES 3a & 3b** illustrate exemplary registrations for message patterns, signaling ways and program type identifiers, and exemplary message attributes for describing messages, used by the apparatus of the present invention.

**FIGURES 4a & 4b** illustrate the routing of a scoped request message in the preferred embodiment of the present invention

**FIGURES 5a & 5b** illustrate the routing of a scoped notice message in the preferred embodiment of the present invention

### NOTATIONS AND NOMENCLATURE

The detailed description which follows is presented largely in terms of algorithms and symbolic representations of operations on data bits within a computer memory. These algorithmic descriptions and representations are the means used by those skilled in the data processing arts to most effectively convey the substance of their work to others skilled in the art.

An algorithm is here, and generally, conceived to be a self-consistent sequence of steps leading to a desired result. These steps are those that require physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, objects, characters, terms, numbers, or the like. It should be borne in mind, however, that all these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary, or desirable in most cases, in any of the operation described herein which form part of the present invention; the operations are machine operations. Useful machines for performing the operations of the present invention include general purpose digital computers or other similar devices. In all cases, the distinction between the method operations in operating a computer and the method of computation itself should be borne in mind. The present invention relates to method steps for operating a computer in processing electrical or other (e.g. mechanical, chemical) physical signals to generate other desired physical signals.

The present invention also relates to apparatus for performing these operations. This apparatus may be specially constructed for the required purposes or it may comprise a general purpose computer as selectively activated or re-configured by a computer program stored in the computer. The algorithms presented herein are not entirely related to any particular computer or other apparatus. In particular, various general purpose machines may be used with programs written in accordance with the teaching herein, or it may prove more convenient to construct more specialized apparatus to perform the required method steps. The required structure for a variety of these machines will appear from the description given below.

### DETAILED DESCRIPTION OF THE INVENTION

A method and apparatus for scoped interprocess message switching having particular application for switching scoped messages between a sender process and a plurality of receiver processes being executed in the same or different sessions, on the same or different computers in a network, is disclosed. In the following description for purposes of explanation, specific numbers, materials and configurations are set forth in order to provide a thorough understanding of the present invention. However, it will be apparent to one skilled in the art that the present invention may be practiced without the specific details. In other instances, well known systems are shown in diagrammatical or block diagram form in order not to obscure the present invention unnecessarily.

### 1. OVERVIEW:

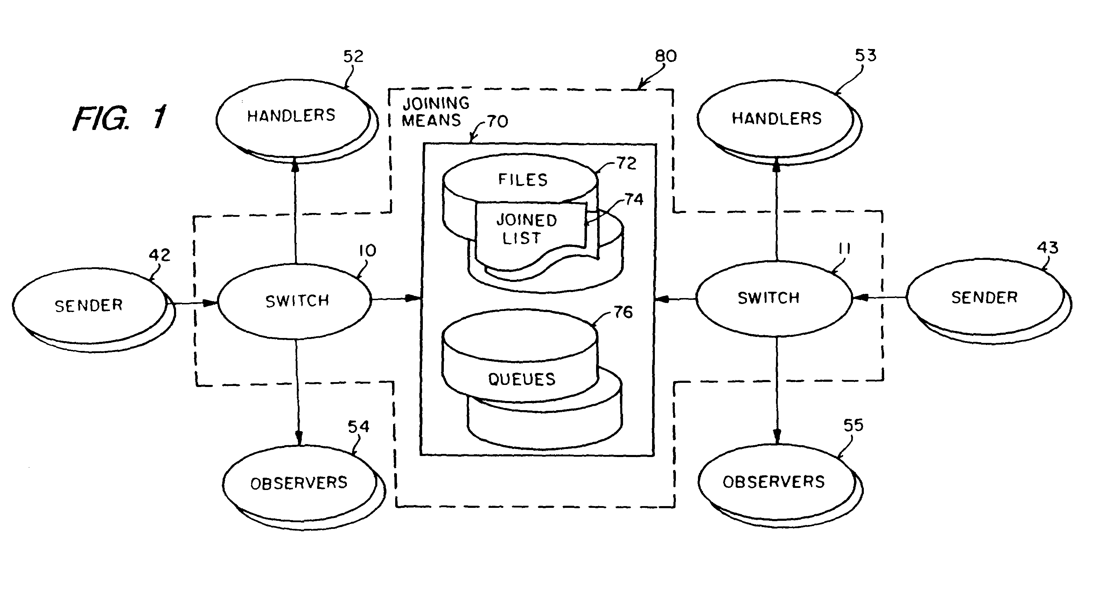

Referring now to **Figure 1**, a block diagram illustrating the preferred embodiment of the apparatus for scoped interprocess message switching of the present invention 80 is shown. The apparatus 80 serves a plurality of sender processes 42, 43 sending scoped messages (not shown) to, and getting reply messages (not shown) from a plurality of receiver processes 52-55.

The apparatus 80 comprises a joining means 70, and a plurality of identical interprocess message switches 10, 11 (two shown) coupled to the joining means 70. Each switch 10 directly serves a local user session comprising the switch 10, a plurality of local sender processes 42 and a plurality of local receiver processes 52, 54. Each switch 10 indirectly serves remote user sessions through remote joined switches 11 within the remote user sessions. Similarly, a remote user session comprises the remote joined switch 11, a plurality of remote sender processes 43 and a plurality of remote receiver processes 53, 55. Processes are local to the switches within their sessions (one switch per session) and remote to the other switches within other sessions.

### 2. JOINING MEANS:

Continuing referring to **Figure 1**, the joining means 70 is used by the interprocess message switches 10, 11 to join one or more non-session message scopes on behalf of locally registered receiver processes. Each of the switches 10, 11 joins a non-session message scope when one of its locally registered receiver processes 52-55 registers a message pattern with the particular non-session message scope. Each of the switches 10, 11 quits a non-session message scope when all of its locally registered receiver processes 52-55 have unregistered message patterns with the particular non-session message scope. Message scopes and registering of receiver processes will be discussed in further details later.

The joining means 70 comprises at least one joined list 74, and at least one shared messages queues 76. Each of the joined lists 74 comprises a plurality of joined records. Each joined record comprises a session identifier and a timestamp. The session identifier identifies the joining switch 10, 11, and the timestamp identifies the time the switch 10, 11 most recently joins the particular message scope. The joining switches 10, 11 join a message scope by creating a joined record in the joined list 76 for the particular message scope.

Preferably, a plurality of joined lists 74 organized on a per message scope type basis is used. Additionally, each of the joined lists 74 further comprises joined sub-lists organized on a per message scope basis. Similarly, a plurality of shared program pending message queues 76 organized on a per message scope type basis is used. Each of the shared program pending message queues 76 further comprise sub-queues organized on a per message scope basis.

### 3. INTERPROCESS MESSAGE SWITCH:

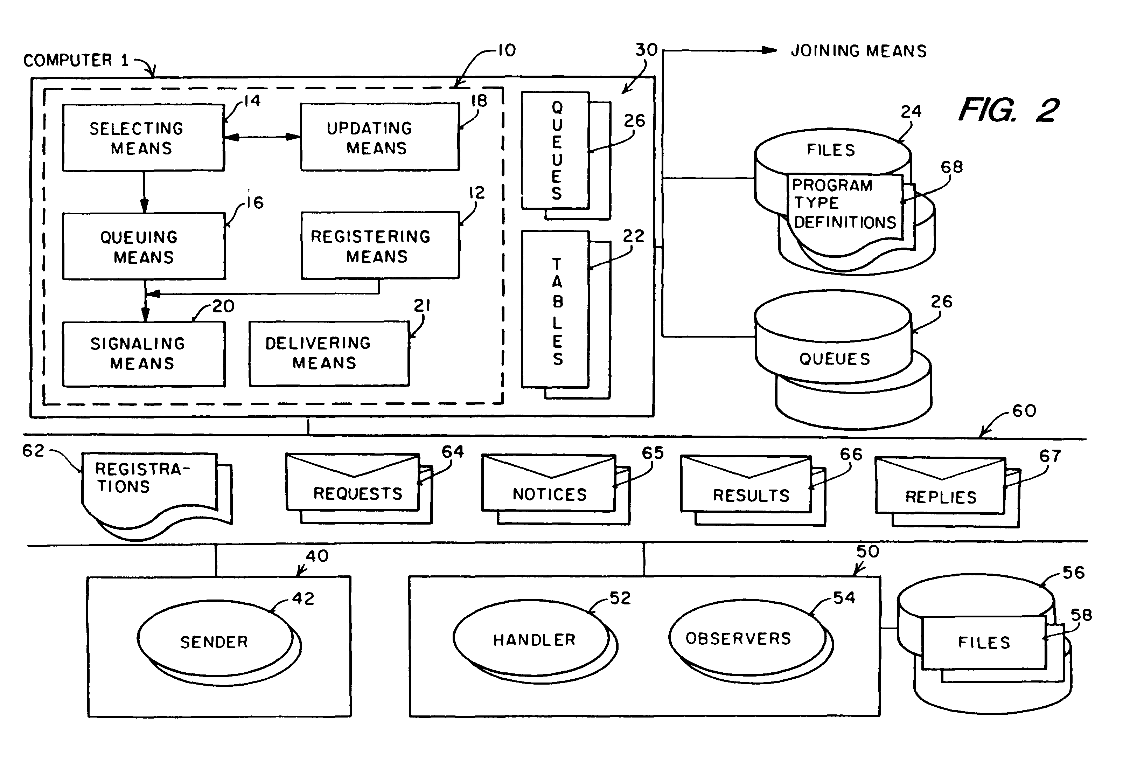

Referring now to **Figure 2**, a block diagram illustrating one of the identical interprocess message switches 10 is shown. The switch 10 is shown in the context of its user session comprising the switch 10, a plurality of local sender processes 42 and a plurality of local receiver processes 52, 54. The local processes 42, 52, 54 are executing on a plurality of computers 30, 40, 50 connected to a network 60. These computers 30, 40, 50 and other computers (not shown) connected to the network 60 further comprise other remote user sessions. Each of these remote user sessions comprises a remote switch (not shown), a plurality of remote sender/receiver processes (not shown).

The local sender processes 42 send scoped messages 64, 65 to and get reply messages 67 from, the local receiver processes 52, 54 and the remote receiver processes. The scoped messages 64, 65 comprise scoped request messages 64, and scoped notice messages 65. Local receiver processes comprise local handler processes 52 and local observer processes 54. Similarly, remote receiver processes comprise remote handler processes and remote observer processes.

The switch 10 comprises a registering means 12 comprising an interface (not shown) for receiving registrations 62 as inputs from the local processes 42, 52, 54, a selecting means 14 coupled to the updating means 18 and comprising an interface (not shown) for receiving scoped messages 64, 65 as inputs from the local sender processes 42, a queuing means 16 coupled to the selecting means 14, an updating means 18 coupled to the selecting means 14 and comprising an interface (not shown) for receiving results 66 as inputs from the local receiver processes 52, 54 and the remote switches, a signaling means 20 coupled to the registering means 12 and the queuing means 16 for outputing signals to the processes 42, 52, 54, and a delivering means 21 comprising an interface (not shown) for receiving acknowledgements from the local processes 42, 52, 54 as inputs and outputing scoped messages 64, 65 to the local receiver processes 52, 54 and reply messages 67 to the local sender processes 42.

### a. Registering Means:

Continuing referring to **Figure 2**, the registering means 12 is for registering local receiver processes 52, 54 with the switch 10. Receiver processes are registered with one switch, their local switch. Registration of local receiver processes 52, 54 comprises registering at least one signaling way and at least one message pattern for each of the local receiver processes 52, 54. Additionally, registration of local receiver processes may further comprise registering a program type identifier for each of the local receiver processes 52, 54.

The signaling ways describe to the switch 10, how the registering local receiver process 52, 54 is to be signaled regarding the availability of a scoped message 64, 65. The message patterns describe to the switch 10, the scoped messages 64, 65 which the registering local receiver process 52, 54 is to receive. The message pattern may describe scoped messages 64, 65 which are process oriented or object oriented. The program type identifier describes to the switch 10 the program type of the program being executed by the registering local receiver process 52, 54 by identifying the program type definition 68 of the registering local receiver process 52, 54. The program type definition 68 may be a merged object-program type definition comprising object oriented message patterns merged from object type definitions.

The registering local processes 52, 54 may register dynamically during their initialization or at some later points during their execution. The registering local processes 52, 54 may add registrations 62 or delete prior registrations 62. The adding and deleting may be adding and deleting of subsets of registrations 62.

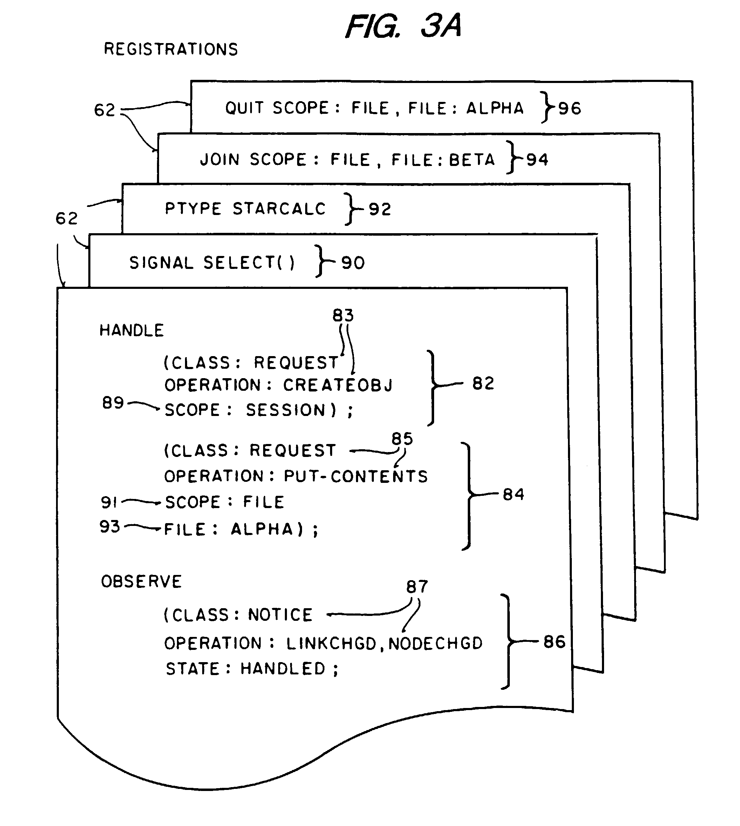

Referring now to **Figure 3a**, a local receiver process registers its interest in handling or observing messages pertaining to a particular message scope by registering message patterns 82, 84 comprising message scope type attributes 89, 91 equaling the message scope type of the particular message scope. Additionally, for non-session message scope types 91, the message patterns 84 may further comprise message non-session scope identifiers equaling the particular message scope. As described in the incorporated Specifications, upon receipt of these registrations, the registering means extracts the message patterns and stores them in tables for subsequent use by the selecting means.

Preferably, message patterns with message scope types scoped to intersections or unions of session message scope type with one or more non-session message scope types may also be registered. It will be understood that intersection of session message scope type with one or more non-session message scope types is a session message scope type, whereas, union of session message scope type with one or more non-session message scope types is a non-session message scope type. Message scope types and message scopes will be discussed in further details in conjunction with message attributes.

Additionally, a registered local receiver process may also widen or narrow its interest in handling or observing messages pertaining to individual non-session message scopes, by adding to 94 or deleting from 96 the content of the non-session message scope identifier attributes 93 in the registered message patterns. As described in the incorporated Specifications, upon receipt of these registrations, the registering means adds to or deletes from the content of the non-session message scope identifier attributes in the stored message patterns scoped to the particular non-session message scope types. Additionally, the registering means also adds to or deletes from the content of the non-session message scope identifier attributes in the stored message patterns scoped to the intersections or unions with the particular non-session message scope types.

An exemplary registration containing a plurality of message patterns scoped to different message scopes is shown in the first exemplary registration 62 in **Figure 3a**. The first exemplary registration 62 comprises two handle message patterns 82, 84 scoped to different message scope types, and an observe message pattern 86 not scoped to any particular message scope type.

The first exemplary handle message pattern 82 contains a plurality of message attributes 83 describing to the switch that the registering local receiver process is to receive messages 64 with a message class attribute of "Request", a message operation attribute of "Create Obj", representing the action of creating an object, and a message scope type attribute of "Session".

The second exemplary handle message pattern 84 contains a plurality of message attributes 85 describing to the switch that, the registering local receiver process is to receive messages 64 with a message class attribute of "Request", a message operation attribute of "Put_Contents", representing the action of writing out to an object, a message scope type attribute of "File", and a message non-session scope identifier attribute of "Alpha", representing the identifier of a particular file.

The exemplary observe message pattern 86 contains a plurality of message attributes 87 describing to the switch, that the registering local process is to receive messages 65 with a message class of "Notice", a message operation attribute of "LinkChgd, NodeChgd", representing the occurrence of the events of a link change or a node change, and a message state attribute of "Handled", regardless of the message scope type (none specified).

Two exemplary registrations containing addition to and deletion from message patterns scoped to a particular message scope type are also shown in the fourth and fifth exemplary registration 62 in **Figure 3a**. The fourth exemplary registration 62 comprises an addition 94, describing to the switch that, the file identifier of "Beta" is to be added to all message non-session scope identifier attributes in registered message patterns scoped to the message scope types "File", "File in Session" and "File or Session". "File in Session" is the intersection of the message scope type "File" and the message scope type "Session", and "File or Session" is the union of these message scope types. The fifth exemplary registration 62 comprises a deletion 96, describing to the switch that the file identifier of "Alpha" is to be deleted from all message non-session scope identifier attributes in registered message patterns scoped to the message scope types "File", "File in Session" and "File or Session".

Additionally, when a local receiver process registers a program type identifier 92, the registering means also checks the shared program pending messages queues in the joining means previously described, to determine if there are messages pending for a process executing a program of the particular program type being registered. In the registration illustrated, the switch will check for messages pending for a process executing the program "Starcalc".

### b. Selecting Means:

Referring to **Figure 2** again, the selecting means 14 of a receiving switch 10 is for selecting local receiver processes 52, 54 and remote receiver processes (through the joined switches) to receive scoped messages 64, 65 received from the local sender processes 42. Selection of receiver processes comprises selecting at most one local handler process 52, and any number of local observer processes 54 for each session scoped message 64, 65. Selection of receiver processes further comprises selecting at most one local 52 or remote handler process, and any number of local 54 and remote observer processes for each non-session scoped message 64, 65. Handler processes are selected for scoped notice messages 65 as well as for scoped request messages 64. Likewise, observer processes are selected for scoped request messages 64 as well as for scoped notice messages 65. Non-executing receiver processes (i.e. programs) are selected as well as executing receiver processes.

For session scoped messages 64, 65, no additional action is taken by the selecting means 14 of the receiving switch 10. As a result, only local receiver processes 52, 54 are selected.

For non-session scoped messages 64, 65, the selecting means 14 of the receiving switch 10 further selects joined switches and sends copies of the non-session scoped messages 64, 65 to the selected joined switches for selection of remote observer processes and remote handler processes. The selecting means 14 of the receiving switch 10 selects the joined switches for selection of remote observer processes regardless whether local receiver processes 52, 54 are selected. The selecting means 14 of the receiving switch 10 selects the joined switches for selection of remote handler processes, only if local handler processes 52 are not selected.

For selection of remote observer processes, the selecting means 14 of the receiving switch 10 selects, for each of the non-session scoped messages 64, 65, all joined switches that have not been sent a copy of the non-session scoped message 64, 65. The selecting means 14 of the receiving switch 10 further comprises a checking means (not shown) coupled to the third matching means for determining whether a joined switch has been sent a copy of a non-session scoped message 64, 65 by comparing the content of a message dispatched list attribute of a non-session scoped message 64, 65 against the joined records in the joined lists for the particular non-session message scope. If one or more joined switches are selected for a non-session scoped message 64, 65, the checking means of the selecting means 14 of the receiving switch 10 updates a message recipient attribute in the non-session scoped messages 64, 65 to "Observers Only", and the message dispatched list attribute with the session identifiers of the selected joined switches, and sends a copy of the updated non-session scoped message 64, 65 to each of the selected joined switches. The message recipient attribute and the message dispatched list attribute of a scoped message 64, 65 will be discussed in further details in conjunction with other message attributes later.

For selection of remote handler processes, the selecting means 14 of the receiving switch 10 selects, for each of the non-session scoped messages 64, 65 with no local handler processes, one of the joined switches that have not been sent a copy of the non-session scoped message 64, 65. The selecting means 14 of the receiving switch 10 determines whether a joined switch has been sent a copy of a non-session scoped message 64, 65 in the same manner as described above. The checking means of the selecting means 14 of the receiving switch 10 selects one of these joined switches arbitrarily. If a joined switch is selected for a non-session scoped message 64, 65, the selecting means 14 of the receiving switch 10 updates the message recipient attribute in the non-session scoped messages 64, 65 to "Handler Only", message handler program type attributes with matching handler program types from message signature matchings and the message dispatched list attribute with the selected joined switch's session identifier, and sends a copy of the updated non-session scoped message 64, 65 to the selected joined switch.

The selecting means 14 of the receiving switch 10 repeats this process until a remote handler process is selected or all the joined switches have been selected. The selecting means 14 of the receiving switch 10 being coupled to the updating means 18 receives the scoped messages 64, 65 as input again, when no remote handler processes are selected by the selected joined switches. The selecting means 14 of the receiving switch 10 may determine whether the scoped messages 64, 65 are received from the sender processes 42 or the updating means 18 in a variety of manners, including but not limited to the message state attributes. The message state attribute and the updating means 18 will be discussed in further details later in conjunction with message attributes and reply messages respectively.

The non-session scoped messages 64, 65 may be sent from the receiving switch 10 to the selected joined switches using any system message sending services. Preferably, the same system message sending services used by the registering means 12, as described in the incorporated Specification, is used.

Selection of remote receiver processes by the selecting means of a joined switch comprises the same steps of matching, choosing, and starting for selection of local receiver processes 52, performed by the selecting means 14 of the receiving switch 10. The selecting means of a joined switch do not select joined switches. Furthermore, if the program type definitions 68 are stored in files 24 shared among the joined switches, the selecting means of a joined switch may skip the step of message signatures matching. The selecting means of a joined switch may determine whether the scoped messages 64, 65 are received from the receiving switch 10 or its local sender processes in a variety of manners, including but not limited to the message state attribute and the message recipient attribute.

The routing of session and non-session scoped request and notices messages 64, 65 to local and remote handler and observer processes will be discussed in further details later.

### c. Queuing Means:

Referring to **Figure 2** again, the queuing means 16 of the receiving switch 10 is for queuing copies of the scoped messages 64, 65 with selected local receiver processes 52, 54. The queuing means 16 of the receiving switch 10 being coupled to the selecting means 14 receives the scoped messages 64, 65 and local selection results from the selecting means 14 as input. The queuing means 16 of the receiving switch 10 queues copies of the scoped messages 64, 65 with executing selected local receiver processes 52, 54 for subsequent retrieval by these local processes. The queuing means 16 of the receiving switch 10 also queues copies of the scoped messages 64, 65 with non-executing selected receiver processes (i.e. programs), if the message disposition attributes are "queue".

The queuing means 16 of the receiving switch 10 queues copies of the program pending session scoped messages 64, 65 into one of a plurality of private program pending messages queues 26. The queuing means 16 of the receiving switch 10 queues copies of the program pending non-session scoped messages 64, 65 into one of the shared program pending messages queues in the joining means (see **Fig 1**), for the particular non-session message scopes.

Similarly, the queuing means of a joined switch is for queuing copies of the scoped messages 64, 65 with selected remote receiver processes (local to the joined switch). The queuing means of a joined switch receives the scoped messages 64, 65 as input and queues copies of them in the same manner as the queuing means 16 of the receiving switch 10.

### d. Signaling & Delivering Means:

Continuing referring to **Figure 2**, the signaling means 20 of the receiving switch 10 is for signaling the selected local receiver processes 52, 54 regarding the availability of a scoped message 64, 65. The signaling means 20 of the receiving switch 10 being coupled to the queuing means 16 of the receiving switch 10, receives the selected executing local receiver process identifiers from the queuing means 16 of the receiving switch 10, as input. The signaling means 20 of the receiving switch 10 being also coupled to the registering means 12 of the receiving switch 10 receives receiver processes identifiers of registering local receiver processes with program types that are matching against pending programs, from the registering means 12 of the receiving switch 10, as input. The signaling means 20 of the receiving switch 10 signals these executing local receiver processes 52, 54 regarding the availability of the queued scoped messages 64, 65. It will be understood that local receiver processes 52, 54 being started by the receiving switch 10 do not have to be signaled. The starting local receiver processes 52, 54 are "signaled" as part of the start up process.

Similarly, the signaling means of a joined switch is for signaling the selected remote receiver processes (local to the joined switch). The signaling means of a joined switch receives the remote receiver processes identifiers (local to the joined switch) and signals them in the same manner as the signaling means 20 of the receiving switch 10.

The delivering means 21 of the receiving switch 10 is for dequeuing the queued scoped messages 64, 65 and delivering the scoped messages 64, 65 to the selected local receiver processes 52, 54. The delivering means 21 of the receiving switch 21 comprises an interface (not shown) for receiving acknowledgements from the local receiver processes 52, 54 as inputs, indicating that the local receiver processes 52, 54 are ready to receive the queued scoped messages 64, 65. Upon receipt of the acknowledgments, the delivering means 21 of the receiving switch 10 dequeues the queued scoped messages 64, 65 and delivers the scoped messages 64, 65 to the acknowledging local receiver processes 52, 54.

Similarly, the delivering means of a joined switch is for dequeuing and delivering the queued scoped messages 64, 65 to selected remote receiver processes. The delivering means of a joined switch receives acknowledgement from the signaled remote receiver processes (local to the joined switch), dequeues and delivers the scoped messages 64, 65 in the same manner as the delivering means 21 of the receiving switch 10.

### 4. MESSAGE ATTRIBUTES:

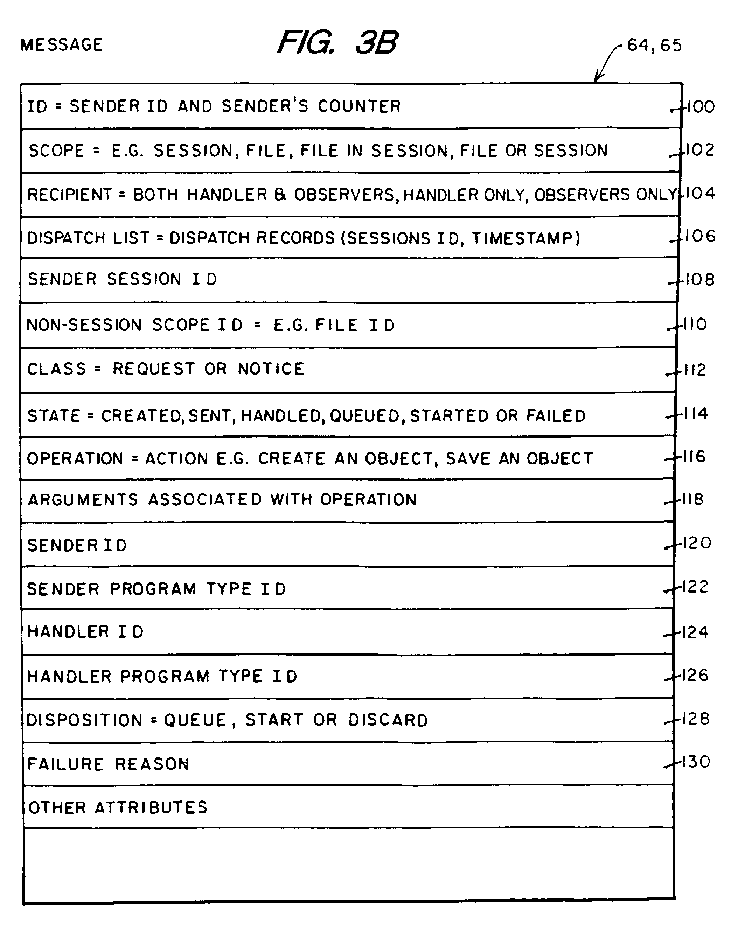

Referring now to **Figure 3b**, a block diagram illustrating exemplary message attributes used by the apparatus of the present invention for describing the scoped messages 64, 65 is shown. Each scoped message 64, 65 comprises at least one message attribute 100-130. The message attributes 100-130 comprise a message identifier 100, a message scope type attribute 102, a message recipient attribute 104, a message dispatch list attribute 106, a message sender session identifier attribute 108, a message non-session scope identifier attribute 110. Preferably, the message attributes 112-130 further comprise a message class attribute 112, a message state attribute 114,, a message operation attribute 116, a message operation argument attribute 118, message sender identifier 120, a message sender program type identifier 122, a message handler identifier 124, a message handler program type identifier 126, a message disposition attribute 128, and a message failure reason attribute 130.

The message identifier 100 uniquely identifies the scoped message 64, 65. The unique message identifier 100 may be constructed in a variety of manners. Preferably, the unique message identifier 100 comprises a sender computer identifier, a sender process identifier and a sender process specific message identifier, such as a message counter, for example, Sextant.712.0001.

The message scope type attribute 102 describes the message scope type of the scoped message 64, 65. Message scope types may be "Session" or one of a plurality of non-session message scope types. Non-session message scope types comprise a message scope type of "File". The message scope type of "Session" is the defaulted message scope type, if no message scope type is specified. A "Session" message scope type describes to the switch that only local receiver processes registered with the receiving switch are to be selected. A non-session message scope type describes to the receiving switch that remote receiver processes are to be selected as well as local receiver processes.

Preferably, message scope types may further comprise intersections and unions of message scope types comprising an intersection message scope type of "File in Session", and a union message scope type of "File or Session". As discussed earlier, the intersection of a non-session message scope with the "Session" message scope is a session message scope, therefore, only local receiver processes are selected for the message scope type of "File in Session"; whereas, the union of a non-session message scope with the "Session" message scope is a non-session message scope, therefore remote as well as local receiver processes are selected for the message scope type of "File or Session".

The message recipient attribute 104 describes to the selecting switch, what type of receiver processes are to be selected. The message recipient attribute 104 comprises one of a plurality of recipient specifications. Recipient specifications comprise "Both Handler and Observers", "Handler Only" and "Observers Only". The recipient specification of "Both Handler and Observers" is the defaulted recipient specification, if none specified.

The message dispatched list attribute 106 describes to the selecting switch, which joined switch has been sent the scoped message 64, 65 and the time at which the scoped message 64, 65 was sent. The message dispatched list attribute 104 comprises a plurality of dispatched records comprising a session identifier and a timestamp. The session identifier identifies the joined switch that has been sent the scoped message 64, 65. The timestamp marks the time the scoped message 64, 65 was sent.

The message sender session identifier attribute 108 describes to the selecting switch, which session (i.e. which joined switch) the sender process is affiliated with. The session identifier may be implemented in a wide variety of manners, as long as it uniquely identifies the joined switch.

The message non-session scope identifier 110 describes to the selecting switch, the particular non-session message scope that the scoped message 64, 65 is scoped to, e.g. a file identifier. Likewise, the message non-session scope identifier may be implemented in a wide variety of manners, as long as it uniquely identifies the non-session message scope.

### 5. REPLIES

Referring back to **Figure 2**, the interprocess message switch 10 also provides specific supports for providing reply messages 67 to the scoped request messages 64. Reply messages 67 are generated by the receiving switch 10 for the local sender processes 42 for scoped request messages 64. No reply messages 67 are generated by the receiving switch 10 for the local sender processes 42 for scoped notice messages 65. Additionally, the supports for providing reply messages 67 are also used by the receiving switch 10 and the joined switches to facilitate selection of remote handler processes for scoped notice messages 65 as well as scoped request messages 64.

Additional specific supports for the reply messages 67 are provided by the updating means 18 and the queuing means 16. The registering means 12, the selecting means 14, the signaling means 20, and the delivering means 21 are also used, but no additional supports beyond what has been described are required in these means.

### a. Updating Means:

The updating means 18 of a receiving switch 10 is for generating reply messages 67 to scoped request messages 64 for the local sender processes 42. The updating means 18 of a receiving switch 10 is also for causing the selecting means 14 of a receiving switch 10 to select another joined switch.

The updating means 18 of the receiving switch 10 being coupled to the selecting means 14 of the receiving switch 10 receives results of local handler processes selection from the selecting means 14 of the receiving switch 10, as input. The updating means 18 of the receiving switch 10 further comprises an interface (not shown) for receiving results 66 of remote handler processes selection from joined switches as input. The updating means 18 of the receiving switch 10 further receives through the same interface, handling results 66 from local handler processes 52 and remote handler selecting switches. Handling results 66 comprise updates of "Handled" or "Failed" to message state attributes and updates to message failure reason attributes. Message state attributes and message failure reason attributes will be discussed in further details later in conjunction with message attributes.

Upon receipt of local selection results from the selecting means 14 of the receiving switch 10, indicating failure to select local handler processes 52 and joined switches (if applicable), the updating means 18 of the receiving switch 10 generates reply messages 67 to scoped request messages 64 and discards scoped notice messages 65. The updating means 18 of the receiving switch 10 generates the reply messages 67 by updating the scoped request messages 64. Updates comprise updating message state attributes to "Failed", and message failure reason attributes. Upon receipt of local selection results from the selecting means 14, indicating success in selecting local handler processes 52 or joined switches (if applicable), the updating means 18 of the receiving switch 10 takes no action.

Upon receipt of the remote selection results (always equal "Failed") from a joined switch, the updating means 18 of the receiving switch 10 dequeues the results pending scoped messages 64, 65 from the results pending messages queues 26, and outputs the dequeued scoped messages 64, 65 to the selecting means 14 of the receiving switch 10. As discussed earlier, the selecting means 14 of the receiving switch 10 being coupled to the updating means 18 of the receiving switch 10 receives the dequeued scoped message 64, 65 as input for selection of the "next" joined switch. Remote selection results will be discussed in further details later in conjunction with the updating means of a joined switch. Queuing of the scoped messages 64, 65 into results pending messages queues will be discussed in further details later in conjunction with the specific supports provided for the reply messages 67 by the queuing means 16 of the receiving switch 10.

Upon receipt of handling results 66 for scoped request messages 64 from local handler processes or remote handler selecting switches, the updating means 18 of the receiving switch 10 generates the reply messages 67. The updating means 18 of the receiving switch 10 dequeues the results pending scoped request messages from results pending messages queues 26 and generates the reply messages 67 by updating the scoped request messages 64 according to the handling results 66 received.

The updating means of a joined switch is used for providing remote selection and handling results 66 for scoped request and notice messages 64, 65 to the receiving switch 10. The updating means of a joined switch being coupled to the selecting means of the joined switch receives results of remote handler processes selection (local to the joined switch) from the selecting means of the joined switch, as input. The updating means of a joined switch further comprise an interface (not shown) for receiving remote handling results from remote handler processes (local to the joined switch).

Upon receipt of selection results from the selecting means of a joined switch, indicating failure to select local handler processes (remote to the receiving switch 10), the updating means of the joined switch sends the selection results 66 for the scoped messages 64, 65 to the receiving switch 10. Upon receipt of selection results from the selecting means of a joined switch, indicating success in selecting local handler processes (remote to the receiving switch 10), the updating means of the joined switch generates handling results to the scoped notice messages 65 and sends the handling results 66 to the receiving switch 10; no action is taken for scoped request messages 64.

Upon receipt of local handling results from local handler processes of a joined switch (remote to the receiving switch 10), the updating means of the joined switch dequeues the results pending scoped request messages 64 from results pending messages queues, generates the remote handling results 66 based on the local handling results received and sends the remote handling results 66 to the receiving switch 10.

Similar to the selecting means, the updating means may determine whether the switch is a receiving switch 10 or a joined switch in a variety of manners, including but not limited to the message state and recipient attributes.

### b. Other Means:

Continuing referring to **Figure 2**, to support replying to the scoped request messages 64, the registering means 12 is also for registering the local sender process 42 with the receiving switch 10. Similar to the local receiver processes 52, 54, a local sender process is registered with one switch. Registration of local sender processes 42 comprises registering at least one signaling way for each of the local sender processes 42.

Additionally, the queuing means 16 of the receiving switch 10 queues additional copies of the scoped messages 64, 65 sent to the joined switches for selection of remote handler processes, pending receipt of results 66 from the joined switches. The queuing means 16 of a handler selecting receiving switch 10 also queues additional copies of the scoped request messages 64 with selected local handler processes 52, pending receipt of results 66 from the local handler processes 52. Similarly, the queuing means of a handler selecting joined switch queues additional copies of the scoped request messages 64 with selected local handler processes (remote to the receiving switch 10) in the same manner as the receiving switch 10.

The selecting means 14 of the receiving switch 10 is also for selecting any number of local observer processes 54 and joined switches (if applicable) to receive copies of the reply messages 67 generated by the receiving switch 10 for the local sender processes 42. Similarly, the selecting means of a joined switch is for selecting remote observer processes (local to the joined switch) to receive copies of the reply messages 67. Selection of local and remote observer processes for reply messages 67 comprises the same steps for selecting local and remote observer processes for the original scoped messages 64, 65. As discussed earlier, reply messages 67 are generated by updating the scoped request messages 64, therefore, reply messages 67 are scoped to the same message scope types and message scopes, as the original scoped request messages 64. Thus, reply messages 67 to non-session scoped request messages 64 are also forwarded to other joined switches for selection of remote receiver processes.

The queuing means 16 of the receiving switch 10 is also for queuing copies of the reply messages 67 for the original local sender processes 42 and selected local observer processes 54. Similarly, the queuing means of a joined switch is also for queuing copies of the reply messages 67 for selected remote observer processes (local to the joined switch). The signaling means 20 of the receiving switch 10 is also for signaling the original local sender processes 42, and the selected executing local observer processes 54 regarding the availability of the queued reply messages 67. Likewise, the signaling means of a joined switch is for signaling the selected executing remote observer processes (local to the joined switch). The delivering means 21 of the receiving switch 10 is also for dequeuing and delivering the queued reply messages 67 upon request of the signaled local processes 42, 54, to the requesting local processes 42, 54. Similarly, the delivering means of a joined switch is also for dequeuing and delivering the queued reply messages 67 upon request of the signaled remote processes (local to the joined switch), to the requesting remote processes (local to the joined switch).

### 6. SCOPED REQUEST MESSAGE ROUTING:

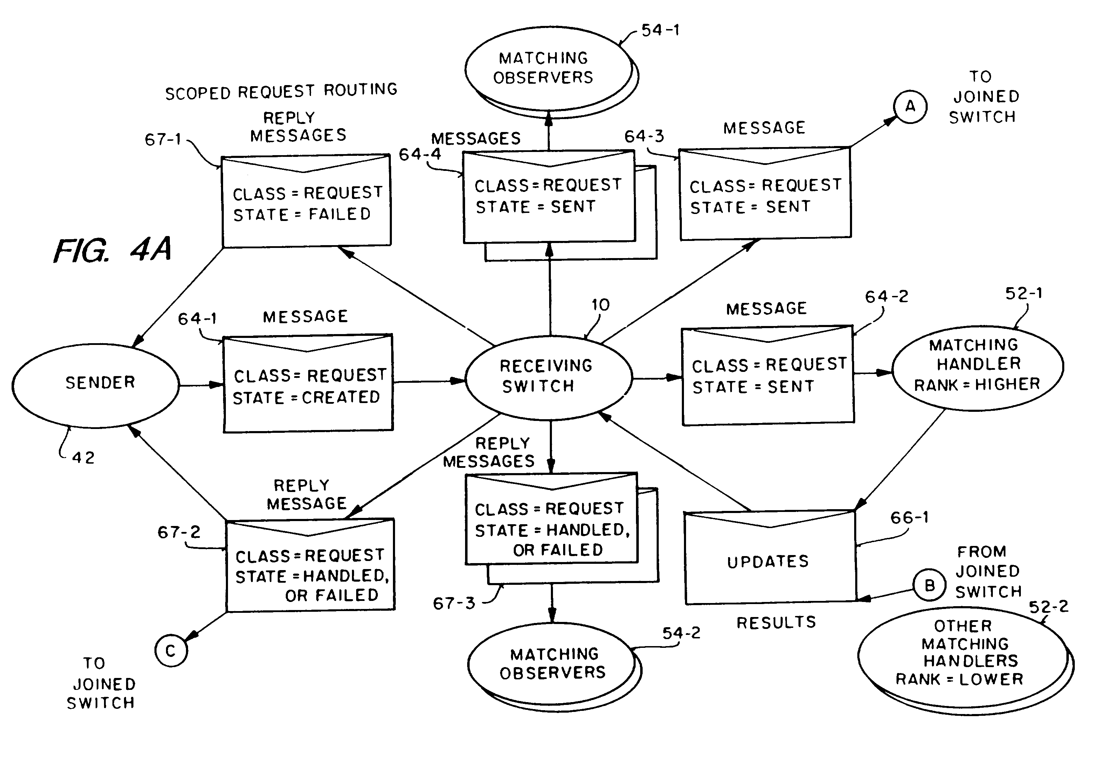

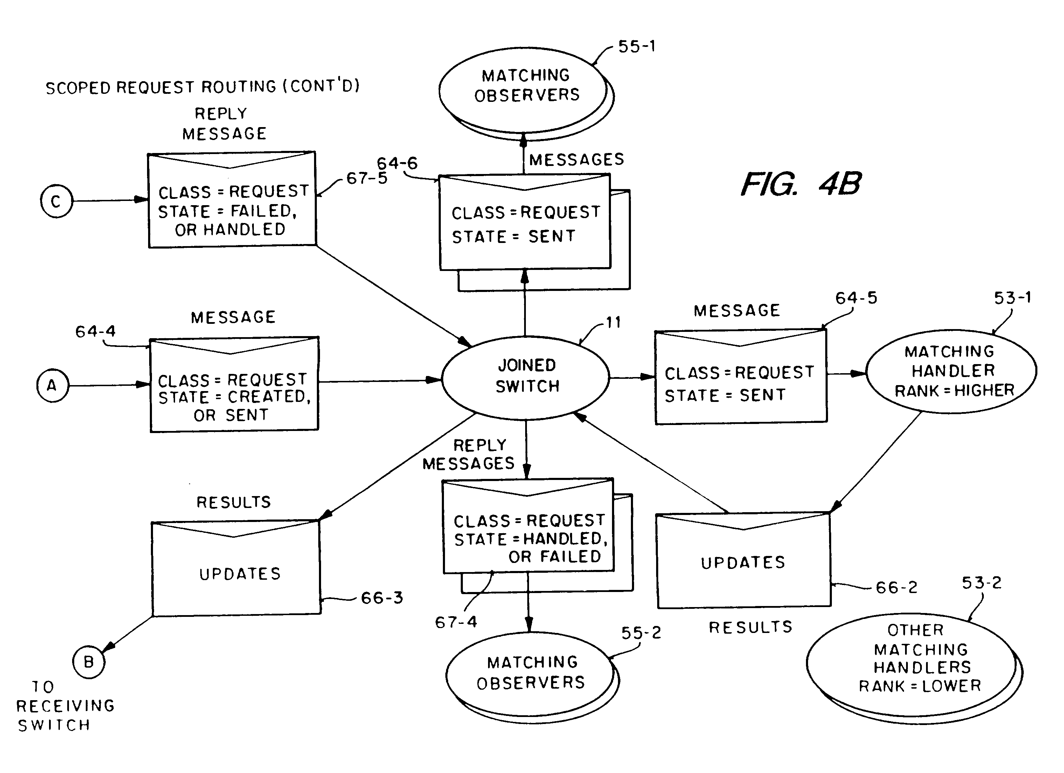

Referring now to **Figures 4a & 4b**, two block diagrams summarizing the routing and disposition of a scoped request message are shown. The scoped request messages 64-1 to 64-6, the results 66-1 to 66-3, and the reply messages 67-1 to 67-5, relate to the scoped request messages 64, the results 66 and the reply messages 67 of **Figure 2**. Likewise, the handler processes 52-1, 52-2, 53-1, 53-2 and the observer processes 54-1, 54-2, 55-1, 55-2 relate to the handler processes 52, 53 and the observer processes 54, 55 of **Figure 1**.

### a. Receiving Switch:

Referring first to **Figure 4a**, initially, the scoped request message with a message state attribute of "Created" 64-1 is sent to the receiving switch 10 as input. Copies of the scoped request message with the message state attribute changed to "Sent" 64-4 are eventually routed to all selected local observer processes 54-1. If the scoped request message is scoped to a non-session message scope, copies of the scoped request message 64-3 with the message state attribute changed to "Sent", and message recipient attribute changed to "Observers Only" are also sent to the all joined switches that have not been sent the non-session scoped request message, for continued selection and routing to remote observer processes.

If local handler processes 52-1, 52-2 are found, one copy of the scoped request message with the message state attribute changed to "Sent" 64-2 is eventually routed to the local handler process with the highest ranking 52-1. No copy of the scoped request message 64-2 is routed to the other eligible local handler processes with lower rankings 52-2.

If no local handler process is selected by the receiving switch 10 and the scoped request message is scoped to a message scope of "Session", the receiving switch updates the message state attribute to "Failed" and generates a reply message 67-1. The reply message with a message state attribute of "Failed" 67-1 is eventually routed back to the originating local sender process 42.

If no local handler process is selected by the receiving switch 10, the scoped request message is scoped to a non-session message scope, and there are other joined switches, the scoped request message 64-3 with the message state attribute changed to "Sent", and the message recipient attribute updated to "Handler Only", is sent to one of the joined switches that has not been sent the non-session scoped request message 64-3, for continued selection and routing to a remote handler process. As described earlier, the joined switch being sent the non-session scoped request message 64-3 is selected arbitrarily from all the joined switches that have not received the non-session scoped request message 64-3. The process is repeated until a remote handler process is found or all these joined switches have been selected. The receiving switch 10 is provided with the remote selection results 66-1 when remote handler processes are not found, by the selected joined switches .

Similarly, if no remote handler process is selected by any of the joined switches for the non-session scoped request message 64-3, the receiving switch 10 updates the message state attribute to "Failed" and generates a reply message 67-1. The reply message with a message state attribute of "Failed" 67-1 is eventually routed back to the originating local sender process 42.

If the scoped request message is handled locally, the handling result 66-1 is sent from the local handler process 52-1 to the receiving switch 10 as input. If the scoped request message is handled remotely, the handling result 66-1 is sent from the handler selecting joined switch to the receiving switch 10 as input. In either case, the receiving switch 10 updates the message state attribute to "Handled" or "Failed" and generates a reply message 67-2.

Copies of the reply message with a message state attribute "Handled" or "Failed" 67-2, 67-3, are eventually routed to all selected local observer processes 54-2, as well as the originating sender process 42. If the reply message 67-2 is a reply message to a non-session scoped request message and there are joined switches that have not received a copy of the reply message 67-2, a copy of the reply message 67-2 with the message recipient attribute changed to "Observers Only" is also sent to all the joined switches that have not received a copy of the reply message 67-2, for continued selection of remote observer processes.

### b. Joined Switch:

Referring now to **Figure 4b**, upon receipt of a non-session scoped request message 64-4 with a message recipient attribute of "Observers Only" from the receiving switch, copies of the non-session scoped request message 64-6 are eventually routed to selected local observer processes (remote to the receiving switch) 55-1.

If a non-session scoped request message 64-4 with a message recipient attribute of "Handler Only" is received from the receiving switch, one copy of the scoped request message with the message state attribute changed to "Sent" 64-5 is eventually routed to the local handler process (remote to the receiving switch) with the highest ranking 53-1, if local handler processes 53-1, 52-2 (remote to the receiving switch) are found. Similarly, no copy of the scoped request message 64-5 is routed to the other eligible local handler processes (remote to the receiving switch) with lower rankings 53-2. Additionally, results of the selection 66-3 are sent by the joined switch 11 to the receiving switch, when the joined switch 11 fails to select a local handler process (remote to the receiving switch).

If the scoped request message is handled locally (remote to the receiving switch), the result 66-2 is sent from the local handler process 53-1 (remote to the receiving switch) to the joined switch 11 as input. The joined switch 11 forwards the received results 66-3 to the receiving switch.

Similarly, upon receipt of a non-session scoped reply message 67-5 with a message recipient attribute of "Observers Only" from the receiving switch, copies of the non-session scoped reply message 67-4 are eventually routed to selected local observer processes (remote to the receiving switch) 55-2.

### 7. SCOPED NOTICE MESSAGE ROUTING:

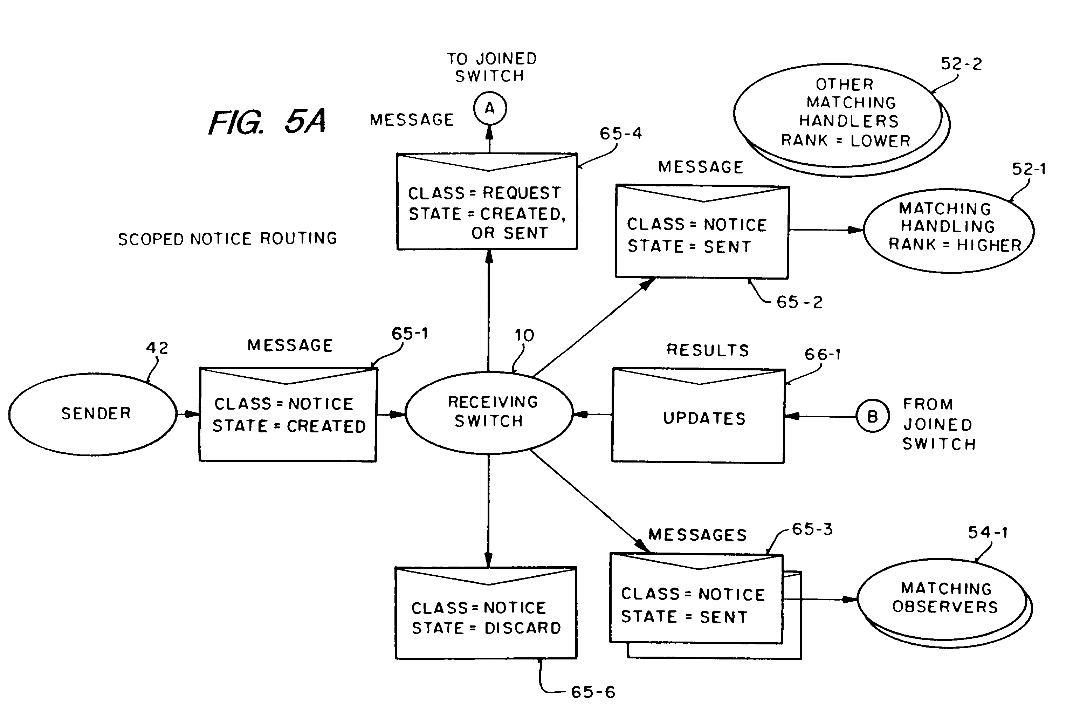

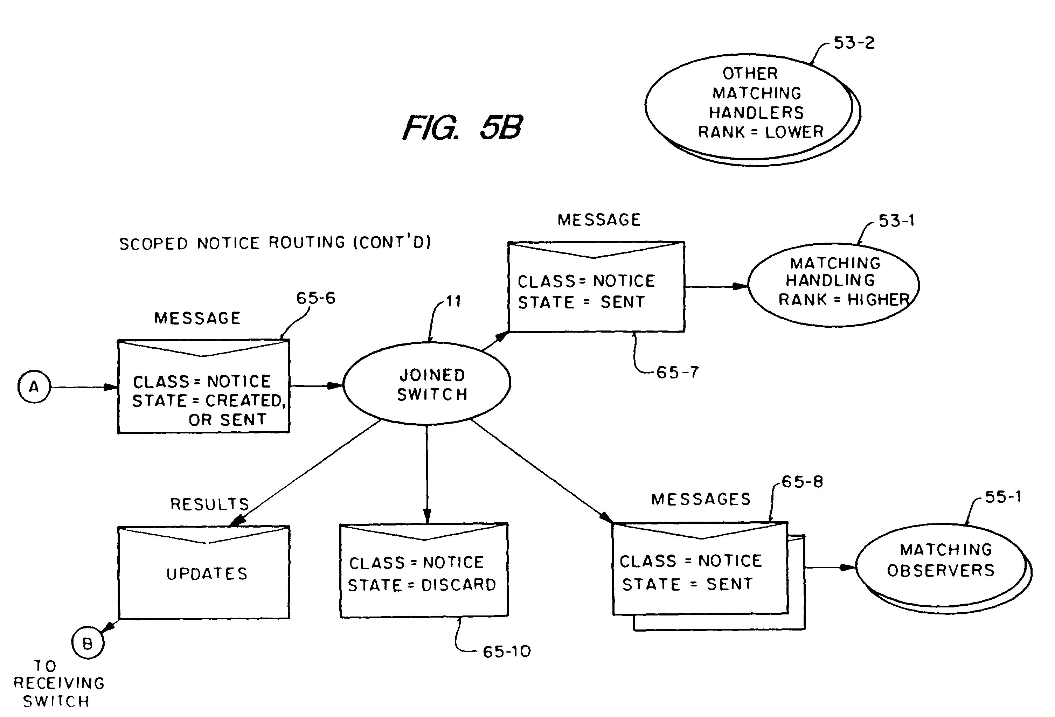

Referring now to **Figures 5a & 5b**, two block diagrams summarizing the routing and disposition of a scoped notice message is shown. Like **Figures 4a & 4b**, the scoped notice messages 65-1 to 65-7, and the results 66-1 to 66-2, relate to the scoped notice messages 65, and the results 66 in **Figure 2**. Similarly, the handler processes 52-1, 52-2, 53-1, 53-2 and the observer processes 54-1, 55-1 relate to the handler processes 52, 53 and the observer processes 54, 55 in **Figure 1**.

### a. Receiving Switch:

Referring first to **Figure 5a**, initially, similar to a scoped request message, a scoped notice message with a message state attribute of "Created" 65-1 is sent to the receiving switch 10 as input. Similarly, copies of the scoped notice message with the message state attribute changed to "Sent" 65-3 are eventually routed to all selected local observer processes 54-1. If the scoped notice message is scoped to a non-session message scope, and there are joined switches, a copy of the scoped notice message 65-4 with the message state attribute changed to "Sent" and the message recipient attribute changed to "Observers Only", is sent to all the joined switches that have not been sent the non-session scoped notice message, for continued selection of remote observer processes.

Likewise, only one copy of the scoped notice message with the message state attribute changed to "Sent" 65-2 is also eventually routed to one selected local handler process 52-1. No copy of the scoped notice message 65-2 is routed to the other eligible local handler processes with lower rankings 52-2.

Unlike a scoped request message, if the scoped notice message is scoped to a message scope of "Session" and handler process 52-1, 52-2 are not selected, the scoped notice message 65-5 is discarded. If the scoped notice message is scoped to a non-session message scope and handler processes 52-1, 52-2 are not selected, the scoped notice message 65-5 is also discarded if there is no joined switch.

Similar to a scoped request message, if the scoped notice message is scoped to a non-session message scope, no local handler process 52-1, 52-2 is selected and there is at least one joined switch, a copy of the non-session scoped notice message 65-4 with the message state attribute updated to "Sent", and the message recipient attribute changed to "Handler Only", is sent to one of the joined switches for continued selection of remote handler processes. As described earlier, the joined switch being sent the non-session scoped notice message 65-4 is selected arbitrarily from all the joined switches that have not received the non-session scoped notice message 65-4. The process is repeated until a remote handler process is found or all these joined switches have been selected. The receiving switch 10 is provided with the selection results 66-1 when remote handler process is not found, by the selected joined switches.

Also unlike a scoped request message, the selected local handler process 52-1 and the selected joined switch, does not provide handling results to a scoped notice message after the scoped notice message is handled.

### b. Joined Switch:

Referring now to **Figure 5b**, upon receipt of a non-session scoped notice message 65-6 with a message recipient attribute of "Observers Only" from the receiving switch, copies of the non-session scoped notice message 65-8 are eventually routed to any selected local observers 55-1 (remote to the receiving switch).

If a non-session scoped notice message 65-6 with a message recipient attribute of "Handler Only" is received, one copy of the scoped notice message with the message state attribute changed to 'Sent" 65-7 is also eventually routed to one selected local handler process 53-1 (remote to the receiving switch). Again, no copy of the scoped notice message 65-7 is routed to the other eligible local handler processes (remote to the receiving switch) with lower rankings 53-2. Additionally, results of the selection 66-2 is sent by the joined switch 11 to the receiving switch when a handler process is not found. Further, handling results 66-2 are generated and sent by the joined switch 11 to the receiving switch when a handler process is found.

After handling the non-session scoped notice message, the selected local handler process 53-1 (remote to the receiving switch) does not provide handling results to the joined switch 11.

### 8. OBJECT ORIENTED MESSAGES:

The method and apparatus described above can also be applied to object oriented messages. The preferred embodiment of the method will then comprise the steps of merging object type definitions and program type definitions, registering a program type identifier for each of the receiver processes with an apparatus for object oriented interprocess message switching, selecting the receiver processes to receive object oriented messages received from the sender process, queuing copies of the received object oriented messages for the selected receiver processes, executing or non-executing, signaling the selected receiver processes regarding the availability of the queued object oriented messages, and delivering the queued object oriented messages when requested by the signaled receiver processes, to the requesting receiver processes. The apparatus comprises various means for accomplishing the steps of merging, registering, selecting, queuing, signaling, and delivering.

For disposing the received object oriented messages, the preferred embodiment of the method further comprises the steps of registering the sender process, discarding object oriented notice messages and replying to object oriented request messages. Likewise, the apparatus further comprises various means for accomplishing the steps of registering, discarding and replying.

For replying to object oriented request messages with no selected handler processes, the preferred embodiment of the method further comprises the steps of generating reply messages by updating the object oriented request messages with selection results, queuing copies of the reply messages for the sender process, signaling the sender process regarding the availability of the queued reply messages, and delivering the queued reply messages when requested by the signaled process. Similarly, the apparatus further comprises various means for accomplishing the steps of updating, selecting, signaling and delivering.

For replying to object oriented request messages with selected handler processes, the preferred embodiment of the method further comprises the steps of queuing an additional copy of each of the object oriented request messages pending results, and dequeuing the result pending object oriented request messages upon receipt of the handling results from the handler processes, prior to the steps of updating, selecting, signaling, and delivering described above. Additionally, the reply messages are generated by updating the object oriented request messages with handling results. Similarly, the apparatus further comprises various means for accomplishing the steps of queuing and dequeuing.

Object type definitions comprise object type identifiers and object operation handle and observe signatures. Object operation signatures may be explicit or inheriting. Program type definitions comprise program type identifiers, and start up parameters. Merged object type-program type definitions comprise program type identifiers, start up parameters, merged object oriented message handle and observe signatures.

Registration of the receiver processes comprises registering program type identifiers, signaling ways and object oriented message patterns. Registration of the sender process comprises registering signaling ways. Receiver and sender processes may register dynamically at their initialization or some later points during their execution.

Object oriented messages comprise a plurality of message attributes describing the messages. Message attributes comprise a message identifier, a message object identifier attribute, a message object type attribute, and a message predecessor attribute. Message attributes further comprise a message class, a message state, a message operation attribute, and a message operation argument attribute. Message classes comprise "Request" and "Notice". Message states comprise "Created", "Sent", "Handled", "Queued", "Started" and "Failed".

Selection comprises selecting at most one handler process and any number of observer processes for each object oriented message. Both handler processes and observer processes are selected regardless of message class. Both executing as well as non-executing processes are selected. Predecessor processes and inheriting processes are selected accordingly depending on the nature of inheritance. Processes are selected by matching message attributes. Matchings are performed against registered object oriented message signatures contained in merged object type-program type definitions and object oriented message patterns.

### 9. VARIATIONS:

While the apparatus for scoped interprocess message switching of the present invention has been described in terms of a preferred embodiment, it will be understood that the present invention is not limited to the session and non-session message scope types discussed herein. The present invention is also not limited to processes executing in different sessions, on different computers, communicating across a network.

## Claims

1. A method for scoped interprocess message switching between a sender process (42, 43) and a plurality of receiver processes (52-55) in a network (60) of computer systems (30, 40, 50) comprising said sender process (42, 43), said plurality of receiver processes (52-55), and a plurality of message switches (10, 11), said method comprising the steps of:
registering each of said receiver processes (52-55) with at most one of said message switches (10, 11) on said network (60) of computer systems (30, 40, 50), each of said registrations comprising registering at least one message pattern (82, 84, 86) for the receiver process (52-55) being registered, each of said message patterns (82, 84, 86) describing scoped messages (64, 65) the receiver process (52-55) being registered is to receive, said description (82, 84, 86) including the scoped messages' message scope types (102), said message scope types (102) including a session (89) and at least one non-session (91) message scope type, said description (82, 84, 86) further including the sender process's session identifier (108) if the scoped messages' message scope types (102) are the session message scope type (89), and non-session message scopes (110) if the scoped messages' message scope types (102) are the at least one non-session message scope type (91);
joining said switches (10, 11) to one of said non-session message scopes (110) on said network (60) of computer systems (30, 40, 50) by said switches (10, 11) enrolling themselves as remote switches (10, 11) for receiving messages scoped with the said one non-session message scope (110) in response and in accordance to said registrations of said receiver processes (52-55);
receiving scoped messages (64, 65) from said sender process (42, 43) by said switches (10, 11);
selecting said registered receiver processes (52-55) by said switches (10, 11) in response to said received scoped messages (64, 65), each of said scoped messages (64, 65) having message attributes (100-130) identifying the scoped message's message scope type (102), the sender process's session identifier (108) if the scoped message's message scope type (102) is the session message scope type (89), and a non-session message scope (110) if the scoped message's message scope type (102) is the non-session message scope type (91), said selections being performed by said switches (10, 11) in accordance to said registered information and using said joining relationships between said switches (10, 11) and said non-session message scopes (110) if said scoped messages' message scope types (102) are the at least one non-session message scope type (91);
queuing copies of said received scoped messages (64, 65) with selected receiver processes (52-55) by said selecting switches (10, 11) in response to its selection of receiver processes (52-55);
signaling said selected receiver processes (52-55) by said queuing switches (10, 11) regarding the availability of said queued scoped messages (64, 65) in response to its queuing of scoped messages (64, 65); and
delivering said queued scoped messages (64, 65) by said signaling switches (10, 11), upon request of said signaled receiver processes (52-55), to said requesting receiver processes (52-55).

2. The method for scoped interprocess message switching between a sender process (42, 43) and a plurality of receiver processes (52-55) as set forth in claim 1, wherein said step of joining said switches (10, 11) to appropriate ones of said non-session message scopes (110) comprises adding joined records to at least one shared joined list (74) by said switches (10, 11), said joined records being added when message patterns (82, 84, 86) having message scope type attributes (102) describing the at least one non-session message scope type (91) are being registered with said switches (10, 11) and said switches (10, 11) not having joined to the non-session message scopes (110), each of said joined records comprising an identifier identifying the joining switch (11) including the switch's session identifier (108), and a timestamp identifying when the joined record was added.

3. The method for scoped interprocess message switching between a sender process (42, 43) and a plurality of receiver processes (52-55) as set forth in claim 2, wherein said at least one shared joined list (74) comprises a plurality of lists shared among said switches (10, 11), and organized on a per non-session message scope type (91) basis.

4. The method for scoped interprocess message switching between a sender process (42, 43) and a plurality of receiver processes (52-55) as set forth in claim 3, wherein said at least one non-session message scope type (91) comprises a non-session message scope type of "File".

5. The method for scoped interprocess message switching between a sender process (42, 43) and a plurality of receiver processes (52-55) as set forth in claim 4, wherein said shared joined list (74) of said non-session message scope type "File" comprises a plurality of sub-lists shared among said switches (10, 11) joined to non-session message scopes (110) of said non-session message scope type "File", and organized on a per file basis.

6. The method for scoped interprocess message switching between a sender process (42, 43) and a plurality of receiver processes (52-55) as set forth in claim 1, wherein each of said scoped messages (64, 65) received from said sender process (42, 43) comprises,
a message identifier (100) for the scoped message (64, 65) comprising the sender process' computer identifier, the sender process' process identifier and the sender process' message specific identifier;
a message scope type attribute (102) comprising one of a plurality of session/non-session message scope types, said session/non-session message scope types comprising a session message scope type of "Session", a non-session message scope type of "File", a session message scope type of "File in Session" and a non-session message scope type of "File or Session";
a sender identifier attribute (108) comprising the sender process' session identifier;
a message recipient attribute (104) comprising one of a plurality of recipient specifications, said recipient specifications comprising a recipient specification of "Handler Only", a recipient specification of "Observers Only", and a recipient specification of "Both Handler and Observers";
a message dispatched list attribute (106) comprising a plurality of dispatched records, each of said dispatched records comprising a session identifier identifying one of said switches (10, 11) having have the scoped message (64, 65) dispatched to it, and a timestamp marking when the scoped message (64, 65) was dispatched; and
a non-session message scope attribute (110) comprising one of a plurality of non-session message scope identifiers identifying the non-session message scope (110) of the scoped message (64, 65).

7. The method for scoped interprocess message switching between a sender process (42, 43) and a plurality of receiver processes (52-55) as set forth in claim 1, wherein;
the received scoped message (64, 65) is scoped to a non-session message scope (110) and the receiving switch (10) successfully selected a local registered receiver process (52-55) to handle the received scoped message (64, 65);
said step of selecting said registered receiver processes (52-55) by said switches (10, 11) comprises the steps of;
identifying the switches (10, 11) joined to the non-session message scope (110) of the received scoped message (64, 65) by the receiving switch (10), using said joining relationships between said switches (10, 11) and said non-session message scopes (110),
updating a message recipient attribute (104) of the scoped message (64, 65) to "Observers Only" and a message dispatched list attribute (106) of the scoped message (64, 65) with sessions identifiers of the switches (10, 11) having joined to the non-session message scope (110) of the scoped message (64, 65) by said receiving switches (10), and
sending the updated scoped message (64, 65) to the identified switches (10, 11) by the receiving switch (10) for continued selection of remote observer processes.

8. The method for scoped interprocess message switching between a sender process (42, 43) and a plurality of receiver processes (52-55) as set forth in claim 1, wherein,
the received scoped message (64, 65) is scoped to a non-session message scope (110) and the receiving switch (10) is unsuccessful in selecting a local registered receiver process (52-55) to handle the received scoped message (64, 65);
said step of selecting said registered receiver processes (52-55) by said switches (10, 11) further comprises the steps of;
arbitrarily selecting one of the switches (10, 11) joined to the non-session message scope (110) of the scoped message (64, 65) and not having been sent the scoped message (64, 65) by the receiving switch (10),
updating a message recipient attribute (104) of the scoped message (64, 65) to "Handler Only" and a message dispatched list attribute (106) of the scoped message (64, 65) with the selected switch's session identifier (108) by the receiving switch (10), and
sending the updated scoped message (64, 65) to the selected switch (10, 11) by the receiving switch (10) for continued selection of a receiver process (52-55) registered with the selected switch (10, 11) to handle the scoped message (64, 65).

9. The method for scoped interprocess message switching between a sender process (42, 43) and a plurality of receiver processes (52-55) as set forth in claim 8, wherein said step of selecting said registered receiver processes (52-55) by said switches (10, 11) further comprises the step of repeating said steps of selecting, updating and sending by the receiving switch (10), until a receiver process (52-55) registered with a switch joined to the non-session message scope (110) of the scoped message (64, 65) is found to handle the scoped message (64, 65), or all switches (10, 11) joined to the non-session message scope (110) of the scoped message (64, 65) have been selected.

10. The method for scoped interprocess message switching between a sender process (42, 43) and a plurality of receiver processes (52-55) as set forth in claim 9, wherein said step of selecting said registered receiver processes (52-55) by said switches (10, 11) further comprises the step of providing the receiving switch (10) with the selection results of the selected switch (10, 11), by the selected switch (10, 11), when the selected switch (10, 11) fails to select a receiver process (52-55) registered with the selected switch (10, 11) to handle the scoped message (64, 65).

11. An apparatus for scoped interprocess message switching between a sender process (42, 43) and a plurality of receiver processes (52-55) in a network (60) of computer systems (30, 40, 50) comprising said sender process (42, 43) and said plurality of receiver processes (52-55), said apparatus comprising:
a plurality of message switches (10, 11) for receiving scoped messages (64, 65) from said sender process (42, 43) and delivering the received scoped messages (64, 65) to said receiver processes (52-55),
each of said scoped messages (64, 65) having a first message attribute (102) identifying the scoped message's message scope type, said message scope types (102) including a session (89) and at least one non-session message scope type (91), each of said scoped messages (64, 65) further having a second message attribute (108) identifying the sender process's session identifier if the scoped message's message scope type (102) is the session message scope type (89), and a third message attribute (110) identifying a non-session message scope if the scoped message's message scope type (102) is the non-session message scope type (91),
each of said message switches (10, 11) having registration means (12) for registering a subset of said receiver processes (52-55), each of said receiver processes (52-55) being registered with at most one of said message switches (10, 11), each of said registrations comprising registering at least one message pattern (82, 84) for the receiver process (52-55) being registered, each of said message patterns (82, 84, 86) describing scoped messages (64, 65) the receiver process (52-55) being registered is to receive, said descriptions (82, 84, 86) including the scoped messages' message scope types (102), said descriptions (82, 84, 86) further including the sender process' session identifier (108) if the scoped messages' message scope types (102) are the session message scope type (89), and non-session message scopes (110) if the scoped messages' message scope types (102) are the at least one non-session message scope type (91);
selection means (14) coupled with said registration means (12) for selecting receiver processes (52-55) registered with the switch to receive said scoped messages (64, 65) sent by said sender process (42, 43) in response to receiving said scoped messages (64, 65);
queuing means (16) coupled with said selection means (14) for queuing copies of said scoped messages (64, 65) with selected receiver processes (52-55) in response to said selection of receiver process (52-55),
signaling means (20) coupled to said queuing means (16) for signaling said selected receiver processes (52-55), regarding the availability of said queued scoped messages (64, 65) in response to said queuing of scoped messages (64, 65), and
delivery means (21) coupled to said queuing means (16) for delivering said queued scoped messages (64, 65), upon request of said signaled receiver processes (52-55), to said requesting receiver processes (52-55); and
joining means (70) coupled to said registration and selection means (14) of said switches (10, 11) for joining said switches (10, 11) to one of said non-session message scopes (110), said switches (10, 11) joining themselves to said one non-session message scope (110) by enrolling themselves as remote switches (10, 11) for receiving messages scoped with the said one non-session message scope (110) in response and in accordance to said registrations of said receiver processes (52-55), said selections of receiver processes (52-55) being performed by said switches (10, 11) in accordance to said registrations and using said joining relationships between said switches (10, 11) and said non-session message scopes (110) if said scoped messages' message scope type (102) is the said one non-session message scope type (91).

12. The apparatus for scoped interprocess message switching between a sender process (42, 43) and a plurality of receiver processes (52-55) as set forth in claim 11, wherein said joining means (70) comprises at least one shared joined list (74), each of said at least one shared joined list (74) having a plurality of joined records, said joined records being added when message patterns (82, 84, 86) describing the at least one non-session message scope type (91) are being registered with said switches (10, 11), and said switches (10, 11) not having joined to the non-session message scopes (110), each of said joined records comprising an identifier identifying the joining switch (11) including the switch's session identifier (108), and a timestamp identifying when the joined record was added.

13. The apparatus for scoped interprocess message switching between a sender process (42, 43) and a plurality of receiver processes (52-55) as set forth in claim 12, wherein said at least one shared joined list (74) comprises a plurality of lists shared among said switches (10, 11), and organized on a per non-session message scope type (91) basis.

14. The apparatus for scoped interprocess message switching between a sender process (42, 43) and a plurality of receiver processes (52-55) as set forth in claim 13, wherein said at least one non-session message scope type (91) comprises a non-session message scope type of "File".

15. The apparatus for scoped message switching between a sender process (42, 43) and a plurality of receiver processes (52-55) as set forth in claim 14, wherein said shared joined list (74) of said non-session message scope type "File" comprises a plurality of sub-lists shared among said switches (10, 11) joined to non-session message scopes (110) of said non-session message scope type "File", and organized on a per file basis.

16. The apparatus for scoped interprocess message switching between a sender process (42, 43) and a plurality of receiver processes (52-55) as set forth in claim 11, wherein each of said scoped messages (64, 65) received from said sender process (42, 43) comprises,
a message identifier (100) for the scoped message (64, 65) comprising the sender process' computer identifier, the sender process' process identifier and the sender process' message specific identifier;
a message scope type attribute (102) comprising one of a plurality of session/non-session message scope types (102), said session/non-session message scope types (102) comprising a session message scope type of "Session", a non-session message scope type of "File", a session message scope type of "File in Session" and a non-session message scope type of "File or Session";
a sender identifier attribute (108) comprising the sender process' session identifier;
a message recipient attribute (104) comprising one of a plurality of recipient specifications, said recipient specifications comprising a recipient specification of "Handler Only", a recipient specification of "Observer Only" and a recipient specification of "Both Handler and Observes";
a message dispatched list attribute (106) comprising a plurality of dispatched records, each of said dispatched records comprising a session identifier identifying one of said switches (10, 11) having had the scoped message (64, 65) dispatched to it, and a timestamp marking when the scoped message (64, 65) was dispatched;
a non-session message scope attribute (110) comprising one of a plurality of non-session message scope identifiers identifying the non-session message scopes of the scoped message (64, 65).

17. The apparatus for scoped interprocess message switching between a sender process (42, 43) and a plurality of receiver processes (52-55) as set forth in claim 11, wherein,
each of said selection means (14) of said switches (10, 11) comprises checking means for selecting any number of said switches (10, 11) having joined to the non-session message scope (110) of a scoped message (64, 65) and have not been sent the scoped message (64, 65), to receive the scoped message (64, 65) for remote selection of receiver processes (52-55) to observe the scoped message (64, 65),
each of said checking means of said selection means (14) of said switches (10, 11) performs said selection by checking joined records in at least one shared joined list (74) of said joining means (70);
each of said checking means of said selection means (14) of said switches (10, 11) further updates message attributes (100-130) of the scoped message (64, 65) and sends the updated scoped message (64, 65) to the selected switches (10, 11), said updates comprising updating a message recipient attribute (104) to "Observers Only" and a message dispatched list attribute (106) with session identifiers (108) of the selected switches (10, 11);
each of said checking means of said selection means (14) of said switches (10, 11) performs said selection of switches (10, 11) when the scoped message (64, 65) is scoped to the at least one non-session message scope type (91) and, its selection means (14) is successful in selecting a receiver process (52-55) registered with its switch to handle the scoped message (64, 65).

18. The apparatus for scoped interprocess message switching between a sender process (42, 43) and a plurality of receiver processes (52-55) as set forth in claim 11, wherein,
each of said selection means (14) of said switches (10, 11) comprising checking means for selecting one of said switches (10, 11) having joined to the non-session message scope (110) of a scoped message (64, 65) and have not been sent the scoped message (64, 65), to receive the scoped message (64, 65) for remote selection of a receiver process (52-55) to handle the scoped message (64, 65);
each of said checking means of said selection means (14) of said switches (10, 11) performs said selection by checking joined records in at least one shared joined list (74) of said joining means (70);
each of said checking means of said selection means (14) of said switches (10, 11) further updates message attributes (100-130) of the scoped message (64, 65) and sends the updated scoped message (64, 65) to the selected switch (10, 11), said updates comprising updating a message recipient attribute (104) to "Handlers Only", a message handler's program type attribute (126) with a handler program type and a message dispatched list attribute (106) with the selected switch's session identifier;
each of said checking means of said selection means (14) of said switches (10, 11) performs said selection of a switch when the scoped message (64, 65) is scoped to the at least one non-session message scope type (91), and its selection means (14) is unsuccessful in selecting a receiver process (52-55) registered with its switch to handle the scoped message (64, 65).

19. The apparatus for scoped interprocess message switching between a sender process (42, 43) and a plurality of receiver processes (52-55) as set forth in claim 18, wherein,
the checking means of the selection means (14) of the receiving switch (10) of the scoped message (64, 65) repeats said selection of a switch until a receiver process (52-55) is selected by a selected switch (10, 11) to handle the scoped message (64, 65) of all switches (10, 11) joined to the non-session message scope (110) of the scoped message (64, 65) have been selected.

20. The apparatus for scoped interprocess message switching between a sender process (42, 43) and a plurality of receiver processes (52-55) as set forth in claim 19, wherein, each of said selected switch (10, 11) provides the receiving switch (10) of the scoped message (64, 65) with its selection results when the selected switch (10, 11) fails to select a receiver process (52-55) registered with the selected switch (10, 11) to handle the scoped message (64, 65).

21. The method as set forth in Claim 1, wherein said scoped messages are process oriented messages.

22. The method as set forth in Claim 1, wherein said scoped messages are object oriented messages.

23. The method as set forth in Claim 1, wherein registering each of said receiver processes (52-55) further comprises registering a program type identifier (92) for each of said receiver processes (52-55), which identifies a program type definition (68) of said receiver process (52, 54).

24. The method as set forth in Claim 23, wherein said program type definition (68) comprises a merged object-program type definition.

25. The apparatus as set forth in Claim 11, wherein said scoped messages are process oriented messages.

26. The apparatus as set forth in Claim 11, wherein said scoped messages are object oriented messages.

27. The apparatus as set forth in Claim 11, wherein:
said scoped messages (64, 65) further comprise a fourth message attribute (126) identifying a program type definition (68); and
said registrations further comprise registering a program type identifier (92) for each of said receiver processes (52-55), which identifies a program type definition (68) of said receiver process (52, 54).

28. The apparatus as set forth in Claim 27, wherein said program type definition (68) comprises a merged object-program type definition.

## Patentansprüche

1. Ein Verfahren für eine auf einen Zielbereich gerichtete Zwischen-Prozeß-Nachrichten-Vermittlung (scoped interprocess message switching) zwischen einem Sender-Prozeß (42, 43) und einer Mehrzahl von Empfänger-Prozessen (52-55) in einem Netzwerk (60) von Computersystemen (30, 40, 50), das den Sender-Prozeß (42, 43), die Mehrzahl von Empfänger-Prozessen (52-55) und eine Mehrzahl von Nachrichtenvermittlern (10, 11) aufweist, wobei das Verfahren die Schritte aufweist:
Registrieren jedes der Empfänger-Prozesse (52-55) bei höchsten einem der Nachrichtenvermittler (10, 11) auf dem Netzwerk (60) von Computersystemen (30, 40, 50), wobei jede der Registrierungen die Registrierung wenigstens eines Nachrichtenmusters (82, 84, 86) für den Empfänger-Prozeß (52-55), der registriert wird, umfaßt, wobei jedes der Nachrichtenmuster (82, 84, 86) auf einen Zielbereich gerichtete Nachrichten (scoped messages) (64, 65) beschreibt, die der Empfänger-Prozeß (52-55), der registriert wird, empfangen soll, wobei die Beschreibung (82, 84, 86) Nachrichtenzielbereichstypen (message scope types) (102) der auf einen Zielbereich gerichteten Nachrichten enthält, wobei die Nachrichtenzielbereichstypen (102) einen Sitzung-(89) und wenigstens einen Nicht-Sitzung-(91) Nachrichtenzielbereichstyp umfassen, wobei die Beschreibung (82, 84, 86) ferner den Sitzungsidentifizierer (108) des Sender-Prozesses enthält, sofern die Nachrichtenzielbereichstypen (102) der auf den Zielbereich gerichteten Nachrichten vom Sitzung-Nachrichtenzielbereichstyp (89) sind, und Nicht-Sitzung-Nachrichtenzielbereiche (110) enthält, sofern wenigstens einer der Nachrichtenzielbereichstypen (102) der auf einen Zielbereich gerichteten Nachrichten vom Nicht-Sitzung-Nachrichtenzielbereichstyp (91) ist;
Verbinden der Vermittler (10, 11) zu einem der Nicht-Sitzung-Nachrichtenzielbereiche (110) auf dem Netzwerk (60) von Computersystemen (30, 40, 50) durch die Vermittler (10, 11), die sich selbst als ferne Vermittler (10, 11) zum Empfangen von Nachrichten in den einen Nicht-Sitzung-Nachrichtenzielbereich (110) eintragen, in Erwiderung und in Übereinstimmung mit den Registrierungen der Empfänger-Prozesse (52-55);
Empfangen der auf den Zielbereich gerichteten Nachrichten (scoped messages) (64, 65) aus dem Sender-Prozeß (42, 43) durch die Vermittler (10, 11);
Auswählen der registrierten Empfänger-Prozesse (52-55) durch die Vermittler (10, 11) in Erwiderung der empfangenen auf einen Zielbereich gerichteten Nachrichten (64, 65), wobei jede der auf einen Zielbereich gerichteten Nachrichten (64, 65) Nachrichtenattribute (100-130), die den Nachrichtenzielbereichstyp (102) der auf einen Zielbereich gerichteten Nachricht identifizieren, einen Sitzungsidentifizierer (108) des Sender-Prozesses, sofern der Nachrichtenzielbereichstyp (102) der auf einen Zielbereich gerichteten Nachricht der Sitzung-Nachrichtenzielbereichstyp (89) ist, und einen Nicht-Sitzung-Nachrichtenzielbereich (110), sofern der Nachrichtenzielbereichtyp (102) der auf einen Zielbereich gerichteten Nachricht der Nicht-Sitzung-Nachrichtenzielbereichstyp (91) ist, aufweist, wobei die Auswahlen durch die Vermittler (10, 11) in Übereinstimmung mit den registrierten Informationen und unter Verwendung der verbindenden Beziehungen (joining relationships) zwischen den Vermittlern (10, 11) und den Nicht-Sitzung-Nachrichtenzielbereichen (110), sofern der Nachrichtenzielbereichstyp (102) der auf einen Zielbereich gerichteten Nachrichten der wenigstens eine Nicht-Sitzung-Nachrichtenzielbereichstyp (91) ist, ausgeführt werden;
Einreihen (queuing) von Kopien der empfangenen auf einen Zielbereich gerichteten Nachrichten (64, 65) für ausgewählte Empfänger-Prozesse (52-55) durch die auswählenden Vermittler (10, 11) in Erwiderung von deren Auswahl der Empfänger-Prozesse (52-55);
Benachrichtigen der ausgewählten Empfänger-Prozesse (52-55) durch die einreihenden Vermittler (10, 11) über die Verfügbarkeit der eingereihten auf einen Zielbereich gerichteten Nachrichten (64, 65) in Erwiderung der Einreihung der auf einen Zielbereich gerichteten Nachrichten (64, 65); und
Liefern der eingereihten auf einen Zielbereich gerichteten Nachrichten (65, 65) durch die benachrichtigenden Vermittler (10, 11) bei Anforderung der benachrichtigten Empfänger-Prozesse (52-55) an die anfordernden Empfänger-Prozesse (52-55).

2. Das Verfahren für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 1, wobei der Schritt des Verbindens der Vermittler (10, 11) zu geeigneten der Nicht-Sitzung-Nachrichtenzielbereiche (110) das Hinzufügen verbundener Datensätze zu wenigstens einer geteilten verbundenen Liste (74) durch die Vermittler (10, 11) umfaßt, wobei die verbundenen Datensätze hinzugefügt werden, wenn Nachrichtenmuster (82, 84, 86), die Nachrichtenzielbereichstypattribute (102) aufweisen, die den wenigstens einen Nicht-Sitzung-Nachrichtenzielbereichstyp (91) beschreiben, bei den Vermittlern (10, 11) registriert werden und sich die Vermittler (10, 11) noch nicht zu den Nicht-Sitzung-Nachrichtenzielbereichen (110) verbunden haben, wobei jeder der verbundenen Datensätze einen Identifizierer aufweist, der den verbindenden Vermittler (11) identifiziert, einschließlich des Sitzungsidentifizierers (108) des Vermittlers und einer Zeitmarke, die angibt, wann der verbundene Datensatz hinzugefügt wurde.

3. Das Verfahren für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 2, wobei die wenigstens eine geteilte verbundene Liste (74) eine Mehrzahl von zwischen den Vermittlern (10, 11) geteilten und auf einer Nicht-Sitzung-Nachrichtenzielbereichstyp(91)-Basis organisierten Listen aufweist.

4. Das Verfahren für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 3, wobei der wenigstens eine Nicht-Sitzung-Nachrichtenzielbereichstyp (91) einen Nicht-Sitzung-Nachrichtenzielbereichstyp "Datei" umfaßt.

5. Das Verfahren für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 4, wobei die geteilte verbundene Liste (74) des Nicht-Sitzung-Nachrichtenzielbereichstyps "Datei" eine Mehrzahl von Unterlisten aufweist, die unter den Vermittlern (10, 11), die zu Nicht-Sitzung-Nachrichtenzielbereichen (110) des Nicht-Sitzung-Nachrichtenzielbereichtyps "Datei" verbunden sind, geteilt sind und auf der Basis der Datei organisiert sind.

6. Das Verfahren für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 1, wobei jede der auf einen Zielbereich gerichteten Nachrichten (64, 65), die aus dem Sender-Prozeß (42, 43) empfangen wurden, aufweist
einen Nachrichtenidentifizierer (100) für die auf einen Zielbereich gerichtete Nachricht (64, 65), der einen Computeridentifizierer des Sender-Prozesses, einen Prozeßidentifizierer des Sender-Prozesses und einen nachrichtenspezifischen Identifizierer des Sender-Prozesses umfaßt;
ein Nachrichtenzielbereichstypattribut (102), das einen einer Mehrzahl von Sitzung/Nicht-Sitzung-Nachrichtenzielbereichstypen aufweist, wobei die Sitzung/Nicht-Sitzung-Nachrichtenzielbereichstypen einen Sitzung-Nachrichtenzielbereichstyp "Sitzung", einen Nicht-Sitzung-Nachrichtenzielbereichstyp "Datei", einen Sitzung-Nachrichtenzielbereichstyp "Datei in Sitzung" und einen Nicht-Sitzung-Nachrichtenzielbereichstyp "Datei oder Sitzung" umfassen;
ein Senderidentifiziererattribut (108), das den Sitzungsidentifizierer des Sender-Prozesses umfaßt;
ein Nachrichtenempfängerattribut (104), das eines einer Mehrzahl von Empfängerspezifikationen umfaßt, wobei die Empfängerspezifikationen eine Empfängerspezifikation "Nur Behandler", eine Empfängerspezifikation "Nur Beobachter" und eine Empfängerspezifikation "Sowohl Behandler als auch Beobachter" umfassen;
ein Nachricht-abgefertigt-Listenattribut (106), das eine Mehrzahl von Abgefertigt-Datensätzen aufweist, wobei jeder der Abgefertigt-Datensatz einen Sitzungsidentifizierer, der einen der Vermittler (10, 11) identifiziert, zudem die auf einen Zielbereich gerichtete Nachricht (64, 65) abgefertigt worden ist, und eine Zeitmarke, die markiert, wann die auf einen Zielbereich gerichtete Nachricht (64, 65) abgefertigt wurde, aufweist; und
ein Nicht-Sitzung-Nachrichtenzielbereichsattribut (110), das eines einer Mehrzahl von Nicht-Sitzung-Nachrichtenzielbereichsidentifizieren aufweist, die den Nicht-Sitzung-Nachrichtenzielbereich (110) der auf einen Zielbereich gerichteten Nachricht (65, 65) identifizieren.

7. Das Verfahren für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 1, wobei
die empfangene auf einen Zielbereich gerichtete Nachricht (64, 65) auf einen Nicht-Sitzung-Nachrichtenzielbereich gerichtet ist und der empfangende Vermittler (10) erfolgreich einen lokalen registrierten Empfänger-Prozeß (52.-55) ausgewählt hat, um die empfangene auf einen Zielbereich gerichtete Nachricht (64, 65) zu behandeln;
der Schritt des Auswählens der registrierten Empfänger-Prozesse (52-55) durch die Vermittler (10, 11) die Schritte umfaßt:
Identifizieren der Vermittler (10, 11), die zu dem Nicht-Sitzung-Nachrichtenzielbereich (110) der empfangenen auf einen Zielbereich gerichteten Nachricht (64, 65) verbunden sind, durch den empfangenden Vermittler (10) unter Verwendung der verbindenden Beziehungen zwischen den Vermittlern (10, 11) und den Nicht-Sitzung-Nachrichtenzielbereichen (110),
Aktualisieren eines Nachrichtenempfängerattributs (104) der auf einen Zielbereich gerichteten Nachricht (64, 65) auf "Nur Beobachter" und eines Nachricht-abgefertigt-Listenattributs (106) der auf einen Zielbereich gerichteten Nachricht (64, 65) mit Sitzungsidentifizierern der Vermittler (10, 11), die sich zu dem Nicht-Sitzung-Nachrichtenzielbereich (110) der auf einen Zielbereich gerichteten Nachricht (64, 65) verbunden haben, durch die empfangenden Vermittler (10), und
Senden der aktualisierten auf einen Zielbereich gerichteten Nachricht (64, 65) an die identifizierten Vermittler (10, 11) durch den empfangenden Vermittler (10) für die fortgesetzte Auswahl ferner Beobachterprozesse.

8. Das Verfahren für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 1, wobei
die empfangene auf einen Zielbereich gerichtete Nachricht (64, 65) auf einen Nicht-Sitzung-Nachrichtenzielbereich (110) gerichtet ist und der empfangende Vermittler (10) bei der Auswahl eines lokalen registrierten Empfänger-Prozesses (52-55) zum Behandeln der empfangenen auf einen Zielbereich gerichteten Nachricht (64, 65) nicht erfolgreich ist;
der Schritt des Auswählens der registrierten Empfänger-Prozesse (52-55) durch die Vermittler (10, 11) ferner die Schritte umfaßt:
willkürliches Auswählen eines der Vermittler (10, 11), die zu dem Nicht-Sitzung-Nachrichtenzielbereich (110) der auf einen Zielbereich gerichteten Nachricht (64, 65) verbunden sind und denen die auf einen Zielbereich gerichtete Nachricht (64, 65) noch nicht durch den empfangenden Vermittler (10) gesendet worden ist,
Aktualisieren eines Nachrichtenempfängerattributs (104) der auf einen Zielbereich gerichteten Nachricht (64, 65) auf "Nur Behandler" und eines Nachricht-abgefertigt-Listenattributs (106) der auf einen Zielbereich gerichteten Nachricht (64, 65) mit dem Sitzungsidentifizierern (108) des ausgewählten Vermittlers durch den empfangenden Vermittler (10), und
Senden der aktualisierten auf einen Zielbereich gerichteten Nachricht (64, 65) an den ausgewählten Vermittler (10, 11) durch den empfangenden Vermittler (10) für eine fortgesetzte Auswahl eines Empfänger-Prozesses (52-55), der bei dem ausgewählten Vermittler (10, 11) zum Behandeln der auf einen Zielbereich gerichteten Nachricht (64, 65) registriert ist.

9. Das Verfahren für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 8, wobei der Schritt des Auswählens der registrierten Empfänger-Prozesse (52-55) durch die Vermittler (10, 11) ferner den Schritt des Wiederholens der Schritte des Auswählens, Aktualisierens und Sendens durch den empfangenden Vermittler (10) umfaßt, bis ein Empfänger-Prozeß (52-55), der bei einem zu dem Nicht-Sitzung-Nachrichtenzielbereich (110) der auf einen Zielbereich gerichteten Nachricht (64, 65) verbundenen Vermittler registriert ist, gefunden wurde, um die auf einen Zielbereich gerichtete Nachricht (64, 65) zu behandeln, oder bis sämtliche Vermittler (10, 11), die zu dem Nicht-Sitzung-Nachrichtenzielbereich (110) der auf einen Zielbereich gerichteten Nachricht (64, 65) verbunden sind, ausgewählt worden sind.

10. Das Verfahren für eine auf einen Zielbereich gerichtete Zwischen-Prozeß-Nachrichten-Vermittlung zwischen einem Sender-Prozeß (42, 43) und einer Mehrzahl von Empfänger-Prozessen (52, 55) nach Anspruch 9, wobei der Schritt des Auswählens der registrierten Empfänger-Prozesse (52-55) durch die Vermittler (10, 11) ferner den Schritt des Versorgens des empfangenden Vermittlers (10) mit den Auswahlergebnissen des ausgewählten Vermittlers (10, 11) durch den ausgewählten Vermittler (10, 11) umfaßt, wenn der ausgewählte Vermittler (10, 11) beim Auswählen eines Empfänger-Prozesses (52-55), der zum Behandeln der auf einen Zielbereich gerichteten Nachricht (64, 65) bei dem ausgewählten Vermittler (10, 11) registriert ist, fehlschlägt.

11. Eine Einrichtung für eine auf einen Zielbereich gerichtete Zwischen-Prozeß-Nachrichten-Vermittlung (scoped interprocess message switching) zwischen einem Sender-Prozeß (42, 43) und einer Mehrzahl von Empfänger-Prozessen (52-55) in einem Netzwerk (60) von Computersystemen (30, 40, 50), das den Sender-Prozeß (42, 53) und die Mehrzahl von Empfänger-Prozessen (52-55) aufweist, wobei die Einrichtung aufweist:
eine Mehrzahl von Nachrichtenvermittlern (10, 11) zum Empfangen von auf einen Zielbereich gerichteten Nachrichten (64, 65) aus dem Sender-Prozeß (42, 43) und zum Liefern der empfangenen auf einen Zielbereich gerichteten Nachrichten (64, 65) an die Empfänger-Prozesse (52-55),
wobei jede der auf einen Zielbereich gerichteten Nachrichten (64, 65) ein erstes Nachrichtenattribut (102) aufweist, das den Nachrichtenzielbereichstyp der auf einen Zielbereich gerichteten Nachricht identifiziert, wobei die Nachrichtenzielbereichstypen (102) einen Sitzung-(89) und wenigstens einen Nicht-Sitzung-Nachrichtenzielbereichstyp (91) umfassen, wobei jede der auf einen Zielbereich gerichteten Nachrichten (64, 65) ferner ein zweites Nachrichtenattribut (108) aufweist, das den Sitzungsidentifizierer des Sender-Prozesses angibt, sofern der Nachrichtenzielbereichstyp (102) der auf einen Zielbereich gerichteten Nachricht der Sitzung-Nachrichtenzielbereichstyp (89) ist, und ein drittes Nachrichtenattribut (110) aufweist, das einen Nicht-Sitzung-Nachrichtenzielbereich identifiziert, sofern der Nachrichtenzielbereichstyp (102) der auf einen Zielbereich gerichteten Nachricht der Nicht-Sitzung-Nachrichtenzielbereichstyp (91) ist,
wobei jeder der Nachrichtenvermittler (10, 11) Registrierungsmittel (12) zum Registrieren einer Untermenge der Empfänger-Prozesse (52-55) aufweist, wobei jeder der Empfänger-Prozesse (52-55) bei höchstens einem der Nachrichtenvermittler (10, 11) registriert wird, wobei jede der Registrierungen das Registrieren wenigstens eines Nachrichtenmusters (82, 84) für den Empfänger-Prozeß (52-55), der registriert wird, umfaßt, wobei jedes der Nachrichtenmuster (82, 84, 86) auf einen Zielbereich gerichtete Nachrichten (64, 65) beschreibt, die der registrierte Empfänger-Prozeß (52-55) empfangen soll, wobei die Beschreibungen (82, 84, 86) die Nachrichtenzielbereichstypen (102) der auf Zielbereiche gerichteten Nachrichten enthalten, wobei die Beschreibungen (82, 84, 86) ferner einen Sitzungsidentifizierer (108) des Sender-Prozesses enthalten, wenn die Nachrichtenzielbereichstypen (102) der auf Zielbereiche gerichteten Nachrichten vom Sitzung-Nachrichtenzielbereichstyp (89) sind, und wobei die Beschreibungen Nicht-Sitzung-Nachrichtenzielbereiche (110) enthalten, wenn die Nachrichtenzielbereichstypen (102) der auf Zielbereiche gerichteten Nachrichten wenigstens einen Nicht-Sitzung-Nachrichtenzielbereichstyp (91) umfassen;
mit den Registrierungsmitteln (12) gekoppelte Auswahlmittel (14) zum Auswählen von bei dem Vermittler registrierten Empfänger-Prozessen (52-55) zum Empfangen der auf einen Zielbereich gerichteten Nachrichten (64, 65), die von dem Sender-Prozeß (42, 43) gesendet wurden, in Abhängigkeit vom Empfangen der auf einen Zielbereich gerichteten Nachrichten (64, 65);
mit den Auswahlmitteln (14) gekoppelte Einreihmittel (16) zum Einreihen von Kopien der auf einen Zielbereich gerichteten Nachrichten (64, 65) in eine Warteschlange bei ausgewählten Empfänger-Prozessen (52-55) in Erwiderung der Auswahl des Empfänger-Prozesses (52-55),
mit den Einreihmitteln (16) gekoppelte Benachrichtigungsmittel (20) zum Benachrichtigen der ausgewählten Empfänger-Prozesse (52-55) bezüglich der Verfügbarkeit der in eine Warteschlange eingereihten, auf einen Zielbereich gerichteten Nachrichten (64,65) in Erwiderung des Einreihens der auf einen Zielbereich gerichteten Nachrichten (64, 65), und
mit den Einreihmitteln (16) gekoppelte Liefermittel (21) zum Liefern der eingereihten auf einen Zielbereich gerichteten Nachrichten (64, 65) bei Anforderung der benachrichtigten Empfänger-Prozesse (52-55) an die anfordernden Empfänger-Prozesse (52-55); und
mit den Registrierungs- und den Auswahlmitteln (14) der Vermittler (10, 11) gekoppelte Verbindungsmittel (70) zum Verbinden der Vermittler (10, 11) zu einem der Nicht-Sitzung-Nachrichtenzielbereiche (110), wobei die Vermittler (10, 11) sich selbst mit dem einen Nicht-Sitzung-Nachrichtenzielbereich (110) verbinden, indem sie sich selbst als ferne Vermittler (10, 11) zum Empfangen von Nachrichten eintragen, die auf den einen Nicht-Sitzung-Nachrichtenzielbereich (110) gerichtet sind, in Abhängigkeit und in Übereinstimmung mit den Registrierungen der Empfänger-Prozesse (52-55), wobei die Auswahlen der Empfänger-Prozesse (52-55) von den Vermittlern (10, 11) in Übereinstimmung mit den Registrierungen und unter Verwendung der Verbindungsbeziehungen zwischen den Vermittlern (10, 11) und den Nicht-Sitzung-Nachrichtenzielbereichen (110), sofern der Nachrichtenzielbereichstyp (102) der auf einen Zielbereich gerichteten Nachrichten der eine Nicht-Sitzung-Nachrichtenzielbereichstyp (92) ist, durchgeführt werden.

12. Die Einrichtung für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 11, wobei die Verbindungsmittel (70) wenigstens eine geteilte verbundene Liste (74) aufweisen, wobei jede der wenigstens einen geteilten verbundenen Listen (74) eine Mehrzahl von verbundenen Datensätzen aufweist, wobei die verbundenen Datensätze hinzugefügt werden, wenn Nachrichtenmuster (82, 84, 86), die wenigstens einen Nicht-Sitzung-Nachrichtenzielbereichstyp (91) beschreiben, bei den Vermittlern (10, 11) registriert werden und die Vermittler (10, 11) sich noch nicht zu den Nicht-Sitzung-Nachrichtenzielbereichen (110) vereinigt haben, wobei jeder der verbundenen Datensätze einen Identifizierer aufweist, der den vereinigenden Vermittler (11) identifiziert, einschließlich des Sitzungsidentifizierers (108) des Vermittlers und einer Zeitmarke, die angibt, wann der verbundene Datensatz hinzugefügt wurde.

13. Die Einrichtung für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 12, wobei die wenigstens eine geteilte verbundene Liste (74) eine Mehrzahl von Listen umfaßt, die unter den Vermittlern (10, 11) geteilt sind und auf der Basis des Nicht-Sitzung-Nachrichtenzielbereichstyps (91) organisiert sind.

14. Die Einrichtung für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 13, wobei der wenigstens eine Nicht-Sitzung-Nachrichtenzielbereichstyp (91) einen Nicht-Sitzung-Nachrichtenzielbereichstyp "Datei" umfaßt.

15. Die Einrichtung für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 14, wobei die geteilte verbundene Liste (74) des Nicht-Sitzung-Nachrichtenzielbereichstyp "Datei" eine Mehrzahl von Unterlisten aufweist, die unter den Vermittlern (10, 11), die zu Nicht-Sitzung-Nachrichtenzielbereichen (110) des Nicht-Sitzung-Nachrichtenzielbereichstyps "Datei" verbunden sind, geteilt und auf einer Pro-Datei-Basis organisiert sind.

16. Die Einrichtung für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 11, wobei jede der auf einen Zielbereich gerichteten Nachrichten (64, 65), die aus dem Sender-Prozeß (42, 43) empfangen wird, aufweist:
einen Nachrichtenidentifizierer (100) für die auf einen Zielbereich gerichteten Nachricht (64, 65), der einen Computeridentifizierer des Sender-Prozesses, einen Prozeßidentifizierer des Sender-Prozesses und einen nachrichtenspezifischen Identifizierer des Sender-Prozesses aufweist;
ein Nachrichtenzielbereichstypattribut (102), das einen einer Mehrzahl von Sitzung/Nicht-Sitzung-Nachrichtenzielbereichstypen (102) umfaßt, wobei die Sitzung/Nicht-Sitzung-Nachrichtenzielbereichstypen (102) einen Sitzung-Nachrichtenzielbereichstyp "Sitzung", einen Nicht-Sitzung-Nachrichtenzielbereichstyp "Datei", einen Sitzung-Nachrichtenzielbereichstyp "Datei in Sitzung" und einen Nicht-Sitzung-Nachrichtenzielbereichstyp "Datei oder Sitzung" umfassen;
ein Senderidentifiziererattribut (108), das den Sitzungsidentifizierer des Sender-Prozesses aufweist;
ein Nachrichtenempfängerattribut (104), das eine einer Mehrzahl von Empfängerspezifikationen aufweist, wobei die Empfängerspezifikationen eine Empfängerspezifikation "Nur Behandler", eine Empfängerspezifikation "Nur Beobachter" und eine Empfängerspezifikation "Sowohl Behandler als auch Beobachter" umfassen;
ein Nachricht-abgefertigt-Listenattribut (106), das eine Mehrzahl von Abgefertigt-Datensätzen aufweist, wobei jeder der Abgefertigt-Datensätze einen Sitzungsidentifizierer, der einen der Vermittler (10, 11) identifiziert, zu dem die auf einen Zielbereich gerichtete Nachricht (64, 65) abgefertigt worden ist, und eine Zeitmarke, die markiert, wann die auf einen Zielbereich gerichtete Nachricht (64, 65) abgefertigt wurde, umfaßt;
ein Nicht-Sitzung-Nachrichtenzielbereichsattribut (110), das einen einer Mehrzahl von Nicht-Sitzung-Nachrichtenzielbereichsidentifizierern aufweist, die die Nicht-Sitzung-Nachrichten-Zielbereiche der auf einen Zielbereich gerichteten Nachrichten (64, 65) identifizieren.

17. Die Einrichtung für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 11, wobei
jedes der Auswahlmittel (14) der Vermittler (10, 11) Überprüfungsmittel aufweist zum Auswählen einer beliebigen Anzahl der Vermittler (10, 11), die zu dem Nicht-Sitzung-Nachrichtenzielbereich (110) einer auf einen Zielbereich gerichteten Nachricht (64, 65) verbunden sind und denen die auf einen Zielbereich gerichtete Nachricht (64, 65) nicht gesendet worden ist, um die auf einen Zielbereich gerichtete Nachricht (64, 65) für eine ferne Auswahl der Empfänger-Prozesse (52-55) zum Beobachten der auf einen Zielbereich gerichteten Nachricht (64, 65) zu empfangen,
wobei jedes der Überprüfungsmittel der Auswahlmittel (14) der Vermittler (10, 11) die Auswahl durchführt, indem verbundene Datensätze in wenigstens einer geteilten verbundenen Liste (74) der Verbindungsmittel (70) überprüft werden;
wobei jedes der Überprüfungsmittel der Auswahlmittel (14) der Vermittler (10, 11) ferner Nachrichtenattribute (110-130) der auf einen Zielbereich gerichteten Nachricht (64, 65) aktualisiert und die aktualisierte auf einen Zielbereich gerichtete Nachricht (64, 65) an die ausgewählten Vermittler (10, 11) sendet, wobei die Aktualisierungen das Aktualisieren eines Nachrichtenempfängerattributs (104) auf "Nur Beobachter" und eines Nachricht-abgefertigt-Listenattributs (106) mit Sitzungsidentifizierern (108) der ausgewählten Vermittler (10, 11) umfaßt;
wobei jedes der Überprüfungsmittel der Auswahlmittel (14) der Vermittler (10, 11) die Auswahl der Vermittler (10, 11) durchführt, wenn die auf einen Zielbereich gerichtete Nachricht (64, 65) auf den wenigstens einen Nicht-Sitzung-Nachrichtenzielbereichstyp (91) gerichtet ist und sein Auswahlmittel (14) beim Auswählen eines Empfänger-Prozesses (52-55), der bei seinem Vermittler zum Behandeln der auf einen Zielbereich gerichteten Nachricht (64, 65) registriert ist, erfolgreich ist.

18. Die Einrichtung für eine auf einen Zielbereich gerichtete Zwischen-Prozeß-Nachrichten-Vermittlung zwischen einem Sender-Prozeß (42, 43) und einer Mehrzahl von Empfänger-Prozessen (52 - 55) nach Anspruch 11, wobei
jedes der Auswahlmittel (14) der Vermittler (10, 11) Überprüfungsmittel aufweist zum Auswählen eines derjenigen Vermittler (10, 11), die zu dem Nicht-Sitzung-Nachrichtenzielbereich (110) einer auf einen Zielbereich gerichteten Nachricht (64, 65) verbunden sind und denen die auf einen Zielbereich gerichtete Nachricht (64, 65) noch nicht gesendet wurde, um die auf einen Zielbereich gerichtete Nachricht (64, 65) für eine ferne Auswahl eines Empfänger-Prozesses (52 - 55) zum Behandeln der auf einen Zielbereich gerichteten Nachricht (64, 65) zu empfangen;
wobei jedes der Überprüfungsmittel der Auswahlmittel (14) der Vermittler (10, 11) die Auswahl durchführt, indem verbundene Datensätze in wenigstens einer geteilten verbundenen Liste (74) der Verbindungsmittel (70) überprüft werden;
wobei jedes der Überprüfungsmittel der Auswahlmittel (14) der Vermittler (10, 11) ferner Nachrichtenattribute (100 - 130) der auf einen Zielbereich gerichteten Nachricht (64, 65) aktualisiert und die aktualisierte auf einen Zielbereich gerichtete Nachricht (64, 65) an den ausgewählten Vermittler (10, 11) sendet, wobei die Aktualisierungen das Aktualisieren eines Nachrichtenempfängerattributs (104) auf "Nur Behandler", eines Programmtypattributs (126) eines Nachrichtenbehandlers mit einem Behandlerprogrammtyp und eines Nachricht-abgefertigt-Listenattributs (106) mit dem Sitzungsidentifizierer des ausgewählten Vermittlers umfaßt;
wobei jedes der Überprüfungsmittel der Auswahlmittel (14) der Vermittler (10, 11) die Auswahl eines Vermittlers durchführt, wenn die auf einen Zielbereich gerichtete Nachricht (64, 65) auf den wenigstens einen Nicht-Sitzung-Nachrichtenzielbereichtyp (91) gerichtet ist und sein Auswahlmittel (14) beim Auswählen eines Empfänger-Prozesses (52 - 55), der bei seinem Vermittler zum Behandeln der auf einen Zielbereich gerichteten Nachricht (64, 65) registriert ist, nicht erfolgreich ist.

19. Die Einrichtung für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 18, wobei
das Überprüfungsmittel des Auswahlmittels (14) des empfangenden Vermittlers (10) der auf einen Zielbereich gerichteten Nachricht (64, 65) die Auswahl eines Vermittlers wiederholt, bis ein Empfänger-Prozeß (52-55) durch einen ausgewählten Vermittler (10, 11) ausgewählt wird, um die auf einen Zielbereich gerichteten Nachricht (64, 65) zu behandeln, oder bis sämtliche Vermittler (10, 11), die zu dem Nicht-Sitzung-Nachrichtenzielbereich (110) der auf einen Zielbereich gerichteten Nachricht (64, 65) verbunden sind, ausgewählt worden sind.

20. Die Einrichtung für eine auf einen Zielbereich gerichtete Zwischen-Prozeß-Nachrichten-Vermittlung zwischen einem Sender-Prozeß (42, 43) und einer Mehrzahl von Empfänger-Prozessen (52-55) nach Anspruch 19, wobei jeder der ausgewählten Vermittler (10, 11) den empfangenden Vermittler (10) der auf einen Zielbereich gerichteten Nachricht (64, 65) mit seinen Auswahlergebnissen versorgt, wenn der ausgewählte Vermittler (10, 11) beim Auswählen eines Empfänger-Prozesses (52-55), der bei dem ausgewählten Vermittler (10, 11) zum Behandeln der auf einen Zielbereich gerichteten Nachricht (64, 65) registriert ist, fehlgeht.

21. Das Verfahren nach Anspruch 1, wobei die auf einen Zielbereich gerichteten Nachrichten prozeß-orientierte Nachrichten sind.

22. Das Verfahren nach Anspruch 1, wobei die auf einen Zielbereich gerichteten Nachrichten objekt-orientierte Nachrichten sind.

23. Das Verfahren nach Anspruch 1, wobei das Registrieren jedes der Empfänger-Prozesse (52-55) ferner das Registrieren eines Programmtypidentifizierers (92) für jeden der Empfänger-Prozesse (52-55) umfaßt, welcher eine Programmtypdefinition (68) des Empfänger-Prozesses (52, 54) identifiziert.

24. Das Verfahren nach Anspruch 23, wobei die Programmtypdefinition (68) eine verschmolzene Objekt-Programmtypdefinition ist.

25. Die Einrichtung nach Anspruch 11, wobei die auf einen Zielbereich gerichteten Nachrichten prozeß-orientierte Nachrichten sind.

26. Die Einrichtung nach Anspruch 11, wobei die auf einen Zielbereich gerichteten Nachrichten objekt-orientierte Nachrichten sind.

27. Die Einrichtung nach Anspruch 11, wobei:
die auf einen Zielbereich gerichteten Nachrichten (64, 65) ferner ein viertes Nachrichtenattribut (126) aufweisen, das eine Programmtypdefinition (68) identifiziert; und
die Registrierungen ferner die Registrierung eines Programmtypidentifizierers (92) für jeden der Empfänger-Prozesse (52-55), welche eine Programmtypdefinition (68) des Empfänger-Prozesses (52, 54) identifizieren, umfassen.

28. Die Einrichtung nach Anspruch 27, wobei die Programmtypdefinition (68) eine verschmolzene Objekt-Programmtypdefinition ist.

## Revendications

1. Procédé pour une commutation de message entre processi à délimitation du champ d'application, entre un processus d'émetteur (42, 43) et une pluralité de processi de récepteur (52-55) dans un réseau (60) de systèmes informatiques (30, 40, 50) comprenant ledit processus d'émetteur (42, 43), ladite pluralité de processi de récepteur (52-55), et une pluralité de commutateurs de message (10, 11), ledit procédé comprenant les étapes consistant en :
- l'enregistrement de chacun desdits processi de récepteur (52 à 55) avec au plus un desdits commutateurs de message (10, 11) sur ledit réseau (60) de systèmes informatiques (30, 40, 50), chacun desdits enregistrements comprenant l'enregistrement d'au moins une configuration de message (82, 84, 86) pour le processus de récepteur (52 à 55) enregistré, chacune desdites configurations de message (82, 84, 86) décrivant lesdits messages à délimitation du champ d'application (64, 65) que le processus de récepteur (52 à 55) enregistré doit recevoir, ladite description (82, 84, 86) comprenant les types de champ d'application de message des messages à délimitation du champ d'application (102), lesdits types de champ d'application de message (102) comprenant un type de champ d'application de message d'une session (89) et d'au moins une non-session (91), ladite description (82, 84, 86) comprenant, de plus, l'identificateur de session de processus d'émetteur (108) si les types de champ d'application de message des messages à délimitation du champ d'application (102) sont le type de champ d'application de message de session (89), et les champs d'application de message de non-session (110) si les types de champ d'application de message des messages à délimitation du champ d'application (102) sont le au moins un type de champ d'application de message de non-session ;
- la jonction desdits commutateurs (10, 11) avec un desdits champs d'application de message de non-session (110) sur ledit réseau (60) de systèmes informatiques (30, 40, 50) par lesdits commutateurs (10, 11) s'engageant en tant que commutateurs à distance (10, 11) pour recevoir des messages délimités avec ledit champ d'application de message de non-session (110) en réponse et selon lesdits enregistrements desdits processi de récepteur (52 à 55) ;
- la réception desdits messages à délimitation du champ d'application (64, 65) à partir dudit processus d'émetteur (42, 43) par lesdits commutateurs (10, 11) ;
- la sélection desdits processi de récepteur enregistrés (52 à 55) par lesdits commutateurs (10, 11) en réponse auxdits messages reçus à délimitation de champ d'application (64, 65), chacun desdits messages à délimitation du champ d'application (64, 65) possédant des attributs de message (100 à 130) identifiant le type de champ d'application de message des messages à délimitation du champ d'application (102), l'identificateur de session de processus d'émetteur (108) si le type de champ d'application de message des messages à délimitation du champ d'application (102) est le type de champ d'application de message de session (89), et un champ d'application de message de non-session (110) si le type de champ d'application de message des messages à délimitation du champ d'application (102) est le type de champ d'application de message de non-session (91), lesdites sélections étant effectuées par lesdits commutateurs (10, 11) selon ladite information enregistrée et utilisant lesdites relations de jonction entre lesdits commutateurs (10, 11) et lesdits champs d'application de message de non-session (110) si lesdits types de champ d'application de message des messages à délimitation du champ d'application (102) sont le au moins un type de champ d'application de message de non-session (91) ;
- la mise en file d'attente de copies desdits messages reçus à champ d'application (64, 65) avec des processi sélectionnés de récepteur (52 à 55) par lesdits commutateurs de sélection (10, 11) en réponse à sa sélection de processi de récepteur (52 à 55) ;
- la transmission desdits processi sélectionnés de récepteur (52 à 55) par lesdits commutateurs de mise en file d'attente (10, 11) selon la disponibilité desdits messages à délimitation du champ d'application en file d'attente (64, 65) en réponse à sa mise en file d'attente des messages à délimitation du champ d'application (64, 65) ; et
- la délivrance desdits messages à délimitation du champ d'application en file d'attente (64, 65) par lesdits commutateurs de transmission (10, 11), lors d'une demande desdits processi transmis de récepteur (52 à 55), auxdits processi requis de récepteur (52 à 55).

2. Procédé pour la commutation de messages entre processi à champ d'application entre un processus d'émetteur (42, 43) et une pluralité de processi de récepteur (52 à 55) selon la revendication 1, selon lequel ladite étape de jonction desdits commutateurs (10, 11) avec des champs adaptés parmi lesdits champs d'application de message de non-session (110) comprend l'addition d'enregistrements joints à au moins une liste jointe partagée (74) par lesdits commutateurs (10, 11), lesdits enregistrements joints étant ajoutés lorsque des configurations de message (82, 84, 86) possédant des attributs de type de champ d'application de message (102) décrivant le au moins un type de champ d'application de message de non-session (91) sont enregistrées avec lesdits commutateurs (10, 11) et lesdits commutateurs (10, 11) n'ayant pas été joints aux champs d'application de message de non-session (110), chacun desdits enregistrements joints comprenant un identificateur identifiant le commutateur de jonction (11) comprenant l'identificateur de session du commutateur (108), et un repère de temps identifiant l'instant où l'enregistrement joint a été ajouté.

3. Procédé pour la commutation de messages entre processi à champ d'application entre un processus d'émetteur (42, 43) et une pluralité de processi de récepteur (52 à 55) selon la revendication 1, selon lequel ladite au moins une liste jointe partagée (74) comprend une pluralité de listes partagées parmi lesdits commutateurs (10, 11) et organisées sur une base par type de champ d'application de message de non-session (91).

4. Procédé pour la commutation de messages entre processi à champ d'application entre un processus d'émetteur (42, 43) et une pluralité de processi de récepteur (52 à 55) selon la revendication 3, selon lequel ledit au moins un type de champ d'application de message de non-session (91) comprend un type de champ d'application de message de non-session de "Fichier".

5. Procédé pour la commutation de messages entre processi à champ d'application entre un processus d'émetteur (42, 43) et une pluralité de processi de récepteur (52 à 55) selon la revendication 4, selon lequel ladite liste jointe partagée (74) dudit type de champ d'application de message de non-session "Fichier" comprend une pluralité de listes secondaires partagées parmi lesdits commutateurs (10, 11) joints aux champs d'application de message de non-session (110) dudit type de champ d'application de message de non-session "Fichier", et organisées sur une base par fichier.

6. Procédé pour la commutation de messages entre processi à champ d'application entre un processus d'émetteur (42, 43) et une pluralité de processi de récepteur (52 à 55) selon la revendication 1, selon lequel chacun desdits messages à délimitation du champ d'application (64, 65) reçus à partir dudit processus d'émetteur (42, 43) comprend :
- un identificateur de message (100) pour le message à délimitation du champ d'application (64, 65) comprenant l'identificateur d'ordinateur du processus d'émetteur, l'identificateur de processus du processus d'émetteur et l'identificateur spécifique de message du processus d'émetteur ;
- un attribut de type de champ d'application de message (102) comprenant un type parmi une pluralité de types de champ d'application de message de session/non-session, lesdits types de champ d'application de message de session/non-session comprenant un type de champ d'application de message de session "Session", un type de champ d'application de message de non-session "Fichier", un type de champ d'application de message de session "Fichier en Session" et un type de champ d'application de message de non-session "Fichier ou Session" ;
- un attribut d'identificateur d'émetteur (108) comprenant l'identificateur de session du processus d'émetteur ;
- un attribut de réception de message (104) comprenant une spécification parmi une pluralité de spécifications de récepteur, lesdites spécifications de récepteur comprenant une spécification de récepteur "Gestionnaire Seulement", une spécification de récepteur "Observateurs Seulement", et une spécification de récepteur "A la Fois, Gestionnaire et Observateurs" ;
- un attribut de liste de diffusion de message (106) comprenant une pluralité d'enregistrements distribués, chacun desdits enregistrements distribués comprenant un identificateur de session identifiant un desdits commutateurs (10, 11) vers lequel le message à délimitation du champ d'application (64, 65) a été distribué, et un repère de temps marquant l'instant où le message à délimitation du champ d'application (64, 65) a été distribué ; et
- un attribut de champ d'application de message de non-session (110) comprenant un identificateur parmi une pluralité d'identificateurs de champ d'application de message de non-session identifiant le champ d'application de message de non-session (110) du message à délimitation du champ d'application (64, 65).

7. Procédé pour la commutation de messages entre processi à champ d'application entre un processus d'émetteur (42, 43) et une pluralité de processi de récepteur (52 à 55) selon la revendication 1, selon lequel :
- le message reçu à champ d'application (64, 65) est délimité à un champ d'application de message de non-session (110) et le commutateur de réception (10) sélectionne avec succès un processus de récepteur enregistré en local (52 à 55) pour gérer le message reçu à champ d'application (64, 65) ;
- ladite étape de sélection desdits processi enregistrés de récepteur (52 à 55) par lesdits commutateurs (10, 11) comprend les étapes suivantes :
- l'identification des commutateurs (10, 11) joints au champ d'application de message de non-session (110) du message reçu à champ d'application (64, 65) par le commutateur de réception (10) à l'aide desdites relations de jonction entre lesdits commutateurs (10, 11) et lesdits champs d'application de message de non-session (110) ;
- la mise à jour d'un attribut de réception de message (104) du message à délimitation du champ d'application (64, 65) à "Observateurs Seulement" et d'un attribut de liste distribué de message (106) du message à délimitation du champ d'application (64, 65), les identificateurs de session des commutateurs (10, 11) étant joints au champ d'application de message de non-session (110) du message à délimitation du champ d'application (64, 65) par lesdits commutateurs de réception (10) ; et
- l'envoi du message à délimitation du champ d'application mis à jour (64, 65) aux commutateurs identifiés (10, 11) par le commutateur de réception (10) pour une sélection poursuivie des processi d'observateur à distance.

8. Procédé pour la commutation de messages entre processi à champ d'application entre un processus d'émetteur (42, 43) et une pluralité de processi de récepteur (52 à 55) selon la revendication 1, selon lequel :
- le message reçu à champ d'application (64, 65) est délimité à un champ d'application de message de non-session (110) et le commutateur de réception (10) ne peut sélectionner de processus de récepteur enregistré en local (52 à 55) pour gérer le message à délimitation du champ d'application reçu (64, 65) ;
- ladite étape de sélection desdits processi de récepteur enregistrés (52 à 55) par lesdits commutateurs (10, 11) comprend, de plus, les étapes suivantes :
- la sélection arbitraire d'un des commutateurs (10, 11) joints au champ d'application de message de non-session (110) du message à délimitation du champ d'application (64, 65) et n'ayant pas reçu le message à délimitation du champ d'application (64, 65) par le commutateur de réception (10) ;
- la mise à jour d'un attribut de récepteur de message (104) du message à délimitation de champ d'application (64, 65) à "Gestionnaire Seulement" et d'un attribut de liste de diffusion de message (106) du message à délimitation de champ d'application (64, 65) avec l'identificateur de session de commutateur sélectionné (108) par le commutateur de réception (10) ; et
- l'envoi du message à délimitation de champ d'application mis à jour (64, 65) au commutateur sélectionné (10, 11) par le commutateur de réception (10) pour une sélection poursuivie d'un processus de récepteur (52 à 55) enregistré avec le commutateur sélectionné (10, 11) pour gérer le message à délimitation de champ d'application (64, 65).

9. Procédé pour la commutation de messages entre processi à champ d'application entre un processus d'émetteur (42, 43) et une pluralité de processi de récepteur (52 à 55) selon la revendication 8, selon lequel ladite étape de sélection desdits processi enregistrés de récepteur (52 à 55) par lesdits commutateurs (10, 11) comprend, de plus, une étape de répétition desdites étapes de sélection, de mise à jour et d'envoi par le commutateur de réception (10) jusqu'à ce qu'un processus de récepteur (52 à 55) enregistré avec un commutateur joint au champ d'application de message de non-session (110) du message à délimitation de champ d'application (64, 65) soit trouvé pour gérer le message à délimitation de champ d'application (64, 65) ou que tous les commutateurs (10, 11), joints au champ d'application de message de non-session (110) du message à délimitation de champ d'application (64, 65), aient été sélectionnés.

10. Procédé pour la commutation de messages entre processi à champ d'application entre un processus d'émetteur (42, 43) et une pluralité de processi de récepteur (52 à 55) selon la revendication 9, selon lequel ladite étape de sélection desdits processi enregistrés de récepteur (52 à 55) par lesdits commutateurs (10, 11) comprend, de plus, une étape de fourniture au commutateur de réception (10) des résultats de sélection du commutateur sélectionné (10, 11) par le commutateur sélectionné (10, 11) lorsque le commutateur sélectionné (10, 11) ne peut pas sélectionner un processus de récepteur (52 à 55) enregistré avec le commutateur sélectionné (10, 11) pour gérer le message à délimitation de champ d'application (64, 65).

11. Dispositif pour une commutation de message entre processi à délimitation du champ d'application entre un processus d'émetteur (42, 43) et une pluralité de processi de récepteur (52-55) dans un réseau (60) de systèmes informatiques (30, 40, 50) comprenant ledit processus d'émetteur (42, 43) et ladite pluralité de processi de récepteur (52-55), ledit dispositif comprenant :
- une pluralité de commutateurs de message (10, 11) pour recevoir des messages à délimitation de champ d'application (64, 65) à partir dudit processus d'émetteur (42, 43) et pour délivrer les messages reçus à délimitation de champ d'application (64, 65) auxdits processi de récepteur (52 à 55) ;
- chacun desdits messages à délimitation de champ d'application (64, 65) possédant un premier attribut de message (102) identifiant le type de champ d'application de message du message à délimitation de champ d'application, lesdits types de champ d'application de message (102) comprenant un type de session (89) et au moins un type de champ d'application de message de non-session (91), chacun desdits messages à délimitation de champ d'application (64, 65) possédant, de plus, un second attribut de message (108) identifiant l'identificateur de session de processus d'émetteur si le type de champ d'application de message du message à délimitation de champ d'application (102) est le type de champ d'application de message de session (89), et un troisième attribut de message (110) identifiant un champ d'application de message de non-session si le type de champ d'application de message du message à délimitation de champ d'application (102) est le type du champ d'application de message de non-session (91) ;
- chacun desdits commutateurs de message (10, 11) possédant un moyen d'enregistrement (12) pour enregistrer un sous-ensemble desdits processi de récepteur (52 à 55), chacun desdits processi de récepteur (52 à 55) étant enregistré avec au plus un desdits commutateurs de message (10, 11), chacun desdits enregistrements comprenant l'enregistrement d'au moins une configuration de message (82, 84) pour le processus de récepteur (52 à 55) enregistré, chacune desdites configurations de message (82, 84, 86) décrivant des messages à délimitation de champ d'application (64, 65) que le processus de récepteur (52 à 55) enregistré doit recevoir, lesdites descriptions (82, 84, 86) comprenant les types de champ d'application de message des messages à délimitation de champ d'application (102), lesdites descriptions (82, 84, 86) comprenant, de plus, l'identificateur de session du processus d'émetteur (108) si les types de champ d'application de message des messages à délimitation de champ d'application (102) sont le type de champ d'application de message de session (89) et les champs d'application de message de non-session (110) si les types de champ d'application de message des messages à délimitation de champ d'application (102) sont le au moins un type de champ d'application de message de non-session (91) ;
- un moyen de sélection (14) couplé audit moyen d'enregistrement (12) pour sélectionner des processi de récepteur (52 à 55) enregistrés avec le commutateur pour recevoir lesdits messages à délimitation de champ d'application (64, 65) envoyés par ledit processus d'émetteur (42, 43) en réponse à la réception desdits messages à délimitation de champ d'application (64, 65) ;
- un moyen de mise en file d'attente (16) couplé audit moyen de sélection (14) pour mettre en file d'attente des copies desdits messages à délimitation de champ d'application (64, 65) avec des processi sélectionnés de récepteur (52 à 55) en réponse à ladite sélection du processus de récepteur (52 à 55) ;
- un moyen de transmission (20) couplé audit moyen de mise en file d'attente (16) pour transmettre lesdits processi sélectionnés de récepteur (52 à 55) concernant la disponibilité desdits messages à délimitation de champ d'application en file d'attente (64, 65) en réponse à ladite mise en file d'attente desdits messages à délimitation de champ d'application (64, 65) ;
- un moyen de délivrance (21) couplé audit moyen de mise en file d'attente (16) pour délivrer lesdits messages à délimitation de champ d'application en file d'attente (64, 65) lors d'une demande desdits processi transmis de récepteur (52 à 55) auxdits processi de récepteur demandeurs (52 à 55) ; et
- un moyen de jonction (70) couplé auxdits moyens d'enregistrement et de sélection (14) desdits commutateurs (10, 11) pour joindre lesdits commutateurs (10, 11) à un desdits champs d'application de message de non-session (110), lesdits commutateurs (10, 11) se joignant audit champ d'application de message de non-session (110) en s'engageant en tant que commutateurs à distance (10, 11) pour recevoir des messages délimités avec ledit champ d'application de message de non-session (110) en réponse et selon lesdits enregistrements desdits processi de récepteur (52 à 55), lesdites sélections des processi de récepteur (52 à 55) étant effectuées par lesdits commutateurs (10, 11) selon lesdits enregistrements et utilisant lesdites relations de jonction entre lesdits commutateurs (10, 11) et lesdits champs d'application de message de non-session (110) si ledit type de champ d'application de message des messages à délimitation de champ d'application (102) est ledit type de champ d'application de message de non-session (91).

12. Dispositif pour la commutation de messages entre processi à délimitation du champ d'application entre un processus d'émetteur (42, 43) et une pluralité de processi de récepteur (52 à 55) selon la revendication 11, dans lequel ledit moyen de jonction (70) comprend au moins une liste jointe partagée (74), chacune desdites au moins une liste jointe partagée (74) possédant une pluralité d'enregistrements joints, lesdits enregistrements joints étant ajoutés lorsque lesdites configurations de message (82, 84, 86) décrivant le au moins un type de champ d'application de message de non-session (91) sont enregistrées avec lesdits commutateurs (10, 11) et lesdits commutateurs (10, 11) n'ayant pas été joints aux champs d'application de message de non-session (110), chacun desdits enregistrements joints comprenant un identificateur identifiant le commutateur de jonction (11) comprenant l'identificateur de session du commutateur (108), et un repère de temps identifiant l'instant où l'enregistrement joint a été ajouté.

13. Dispositif pour la commutation de messages entre processi à délimitation du champ d'application entre un processus d'émetteur (42, 43) et une pluralité de processi de récepteur (52 à 55) selon la revendication 12, dans lequel ladite au moins une liste jointe partagée (74) comprend une pluralité de listes partagées parmi lesdits commutateurs (10, 11) et organisées sur une base par type de champ d'application de message de non-session (91).

14. Dispositif pour la commutation de messages entre processi à délimitation du champ d'application entre un processus d'émetteur (42, 43) et une pluralité de processi de récepteur (52 à 55) selon la revendication 13, dans lequel ledit au moins un type de champ d'application de message de non-session (91) comprend un type de champ d'application de message de non-session de "Fichier".

15. Dispositif pour la commutation de messages entre processi à délimitation du champ d'application entre un processus d'émetteur (42, 43) et une pluralité de processi de récepteur (52 à 55) selon la revendication 14, dans lequel ladite liste jointe partagée (74) dudit type de champ d'application de message de non-session "Fichier" comprend une pluralité de listes secondaires partagées parmi lesdits commutateurs (10, 11) joints aux champs d'application de message de non-session (110) dudit type de champ d'application de message de non-session "Fichier", et organisées sur une base par fichier.

16. Dispositif pour la commutation de messages entre processi à champ d'application entre un processus d'émetteur (42, 43) et une pluralité de processi de récepteur (52 à 55) selon la revendication 11, dans lequel chacun desdits messages à délimitation du champ d'application (64, 65) reçus à partir dudit processus d'émetteur (42, 43) comprend :
- un identificateur de message (100) pour le message à délimitation du champ d'application (64, 65) comprenant l'identificateur d'ordinateur du processus d'émetteur, l'identificateur de processus du processus d'émetteur et l'identificateur spécifique de message du processus d'émetteur ;
- un attribut de type de champ d'application de message (102) comprenant un type parmi une pluralité de types de champ d'application de message de session/non-session, lesdits types de champ d'application de message dé session/non-session comprenant un type de champ d'application de message de session "Session", un type de champ d'application de message de non-session "Fichier", un type de champ d'application de message de session "Fichier en Session" et un type de champ d'application de message de non-session "Fichier ou Session" ;
- un attribut d'identificateur d'émetteur (108) comprenant l'identificateur de session du processus d'émetteur ;
- un attribut de réception de message (104) comprenant une spécification parmi une pluralité de spécifications de récepteur, lesdites spécifications de récepteur comprenant une spécification de récepteur "Gestionnaire Seulement", une spécification de récepteur "Observateurs Seulement", et une spécification de récepteur "A la fois, Gestionnaire et Observateurs" ;
- un attribut de liste de diffusion de message (106) comprenant une pluralité d'enregistrements distribués, chacun desdits enregistrements distribués comprenant un identificateur de session identifiant un desdits commutateurs (10, 11) vers lequel le message à délimitation du champ d'application (64, 65) a été distribué, et un repère de temps marquant l'instant où le message à délimitation du champ d'application (64, 65) a été distribué ; et
- un attribut de champ d'application de message de non-session (110) comprenant un identificateur parmi une pluralité d'identificateurs de champ d'application de message de non-session identifiant le champ d'application de message de non-session (110) du message à délimitation du champ d'application (64, 65).

17. Dispositif pour la commutation de messages entre processi à délimitation du champ d'application entré un processus d'émetteur (42, 43) et une pluralité de processi de récepteur (52 à 55) selon la revendication 11, dans lequel :
- chacun desdits moyens de sélection (14) desdits commutateurs (10, 11) comprend un moyen de vérification pour sélectionner un nombre quelconque desdits commutateurs (10, 11) joints au champ d'application de message de non-session (110) d'un message à délimitation de champ d'application (64, 65) et n'ayant pas reçu le message à délimitation de champ d'application (64, 65) afin de recevoir le message à délimitation de champ d'application (64, 65) pour une sélection à distance des processi de récepteur (52 à 55) afin d'observer le message à délimitation de champ d'application (64, 65) ;
- chacun desdits moyens de vérification dudit moyen de sélection (14) desdits commutateurs (10, 11) effectue ladite sélection par vérification des enregistrements joints dans au moins une liste jointe partagée (74) dudit moyen de jonction (70) ;
- chacun desdits moyens de vérification dudit moyen de sélection (14) desdits commutateurs (10, 11) met à jour, de plus, des attributs de message (100 à 130) du message à délimitation de champ d'application (64, 65) et envoie le message à délimitation de champ d'application mis à jour (64, 65) aux commutateurs sélectionnés (10, 11), lesdites mises à jour comprenant une mise à jour d'un attribut de récepteur de message (104) à "Observateurs Seulement" et un attribut de liste de diffusion de message (106) avec des identificateurs de session (108) des commutateurs sélectionnés (10, 11) ;
- chacun desdits moyens de vérification dudit moyen de sélection (14) desdits commutateurs (10, 11) effectue ladite sélection des commutateurs (10, 11) lorsque le message à délimitation de champ d'application (64, 65) est délimité à au moins le type de champ d'application de message de non-session (91), et son moyen de sélection (14) réussit à sélectionner un processus de récepteur (52 à 55) enregistré avec son commutateur pour gérer le message à délimitation de champ d'application (64, 65).

18. Dispositif pour la commutation de messages entre processi à délimitation du champ d'application entre un processus d'émetteur (42, 43) et une pluralité de processi de récepteur (52 à 55) selon la revendication 11, dans lequel :
- chacun desdits moyens de sélection (14) desdits commutateurs (10, 11) comprend un moyen de vérification pour sélectionner un desdits commutateurs (10, 11) joints au champ d'application de message de non-session (110) d'un message à délimitation de champ d'application (64, 65) et n'ayant pas reçu le message à délimitation de champ d'application (64, 65) afin de recevoir le message à délimitation de champ d'application (64, 65) pour une sélection à distance du processus de récepteur (52 à 55) afin de gérer le message à délimitation de champ d'application (64, 65) ;
- chacun desdits moyens de vérification dudit moyen de sélection (14) desdits commutateurs (10, 11) effectue ladite sélection par vérification des enregistrements joints dans au moins une liste jointe partagée (74) dudit moyen de jonction (70) ;
- chacun desdits moyens de vérification dudit moyen de sélection (14) desdits commutateurs (10, 11) met à jour, de plus, des attributs de message (100 à 130) du message à délimitation de champ d'application (64, 65) et envoie le message à délimitation de champ d'application mis à jour (64, 65) aux commutateurs sélectionnés (10, 11), lesdites mises à jour comprenant une mise à jour d'un attribut de récepteur de message (104) à "Gestionnaires Seulement", un attribut de type de programme de gestionnaire de message (126) avec un type de programme de gestionnaire et un attribut de liste de diffusion de message (106) avec des identificateurs de session (108) des commutateurs sélectionnés (10, 11) ;
- chacun desdits moyens de vérification dudit moyen de sélection (14) desdits commutateurs (10, 11) effectue ladite sélection d'un commutateur lorsque le message à délimitation de champ d'application (64, 65) est délimité à au moins le type de champ d'application de message de non-session (91), et son moyen de sélection (14) ne réussit pas à sélectionner un processus de récepteur (52 à 55) enregistré avec son commutateur pour gérer le message à délimitation de champ d'application (64, 65).

19. Dispositif pour la commutation de messages entre processi à délimitation du champ d'application entre un processus d'émetteur (42, 43) et une pluralité de processi de récepteur (52 à 55) selon la revendication 18, dans lequel :
- le moyen de vérification du moyen de sélection (14) du commutateur de réception (10) du message à délimitation de champ d'application (64, 65) répète ladite sélection d'un commutateur jusqu'à ce qu'un processus de récepteur (52 à 55) soit sélectionné par un commutateur sélectionné (10, 11) pour gérer le message à délimitation de champ d'application (64, 65) de tous les commutateurs (10, 11) joints au champ d'application de message de non-session (110) du message à délimitation de champ d'application (64, 65) ayant été sélectionné.

20. Dispositif pour la commutation de messages entre processi à délimitation du champ d'application entre un processus d'émetteur (42, 43) et une pluralité de processi de récepteur (52 à 55) selon la revendication 19, dans lequel chacun desdits commutateurs sélectionnés (10, 11) fournit au commutateur de réception (10) du message à délimitation de champ d'application (64, 65) ses résultats de sélection lorsque le commutateur sélectionné (10, 11) ne réussit pas à sélectionner un processus de récepteur (52 à 55) enregistré avec le commutateur sélectionné (10, 11) afin de gérer le message à délimitation de champ d'application (64, 65).

21. Procédé selon la revendication 1, selon lequel lesdits messages à délimitation de champ d'application sont des messages orientés processus.

22. Procédé selon la revendication 1, selon lequel lesdits messages à délimitation de champ d'application sont des messages orientés objet.

23. Procédé selon la revendication 1, selon lequel l'enregistrement de chacun desdits processi de récepteur (52 à 55) comprend, de plus, un enregistrement d'un identificateur de type de programme (92) pour chacun desdits processi de récepteur (52 à 55), identifiant une définition de type de programme (68) dudit processus de récepteur (52, 54).

24. Procédé selon la revendication 23, selon lequel ladite définition de type de programme (68) comprend une définition de type de programme objet fusionné.

25. Dispositif selon la revendication 11, dans lequel lesdits messages à délimitation de champ d'application sont des messages orientés processus.

26. Dispositif selon la revendication 11, dans lequel lesdits messages à délimitation de champ d'application sont des messages orientés objet.

27. Dispositif selon la revendication 11, dans lequel :
- lesdits messages à délimitation de champ d'application (64, 65) comprennent, de plus, un quatrième attribut de message (126) identifiant une définition de type de programme (68) ; et
- lesdits enregistrements comprennent, de plus, l'enregistrement d'un identificateur de type de programme (92) pour chacun desdits processi de récepteur (52 à 55), identifiant une définition de type de programme (68) dudit processus de récepteur (52, 54).

28. Dispositif selon la revendication 27, dans lequel ladite définition de type de programme (68) comprend une définition de type de programme objet fusionnée.
